# EUROPEAN PATENT SPECIFICATION

(11) **EP 1 746 889 B1**
(45) Date of publication and mention of the grant of the patent: **22.07.2009**
(21) Application number: 05736628.8
(22) Date of filing: 30.04.2005
(51) Int. Cl.: A01N 43/90

(54) **PLANT GROWTH REGULATION**
REGULATION DES PFLANZENWACHSTUMS
REGULATION DE CROISSANCE D'UN VEGETAL

(30) Priority: 12.05.2004 EP 04011251
(43) Date of publication of application: 31.01.2007
(73) Proprietor: Bayer CropScience AG, 40789 Monheim (DE)
(72) Inventor: BASTIAANS, Henricus, M., M., 61250 Usingen (DE); DONN, Günter, 65719 Hofheim (DE); KNITTEL, Nathalie, 65830 Kriftel (DE); MARTELLETTI, Arianna, 65843 Sulzbach (DE); REES, Richard, Chapel Hill, North Carolina 27516 (US); SCHWALL, Michael, 76530 Baden-Baden (DE); WHITFORD, Ryan, B-9000 Gent (BE)
(86) International application number: PCT/EP2005/004689
(87) International publication number: WO 2005/107472

(56) References cited:
- EP-A- 0 458 618
- WO-A-94/29312
- WO-A-96/04281
- FR-A- 1 405 548
- US-A- 6 096 724
- US-B1- 6 303 618

## Description

Present invention relates to the technical field of agrochemicals and methods used in agriculture for plant growth regulation. In particular, the present invention relates to a new class of plant growth regulators for the treatment of plants in order to induce growth regulating responses which result in superior growth of treated plants, certain parts of the plants or, more generally, crop yield.

The term "method for plant growth regulation" or the term "growth regulation process" or the use of the words "plant growth regulation" or other terms using the word "regulate" as used in instant specification relate to a variety of plant responses which improve some characteristic of the plant. "Plant growth regulators" are compounds which possess activity in one or more growth regulation process(es) of a plant.

Plant growth regulation is distinguished here from pesticidal action or growth reduction, sometimes also defined as a plant growth regulation, the intention of which, however, is to destroy or stunt the growth of a plant. For this reason, the compounds used in the practice of this invention are used in amounts which are non-phytotoxic with respect to the plant being treated but which stimulate the growth of the plant or certain parts thereof. Therefore, such compounds may also be called "plant stimulants", their action may be called as "plant growth stimulation".

Plant growth regulation is a desirable way to improve plants and their cropping so as to obtain improved plant growth and better conditions of agriculture practice compared to non-treated plants. This kind of molecules can either inhibit or promote cellular activities. This means that plant growth regulators identified in plants most often regulate division, elongation and differentiation of plant cells in a way that, most often, they have multiple effects in plants. The trigger event can be seen to be different in plants in comparison to the one known from animals.

On the molecular basis, plant growth regulators may work by affecting membrane properties, controlling gene expression or affecting enzyme activity or being active in a combination of at least two of the before mentioned types of interaction.

Plant growth regulators are chemicals either of natural origin, also called plant hormones (like non-peptide hormones e.g. auxins, giberrellins, cytokinins, ethylene, brassinosteroids or abscisic acid, and salicilic acid), lipooligosaccharides (e.g. Nod factors), peptides (e.g. systemin), fatty acid derivatives (e.g. jasmonates), and oligosaccharins (for review see: Biochemistry & Molecular Biology of the Plant (2000); eds. Buchanan, Gruissem, Jones, pp. 558-562; and 850-929) , or they can be synthetically produced compounds (like derivatives of naturally occurring plant growth hormones, ethephon).

Plant growth regulators which work at very small concentrations can be found in many cells and tissues, but they seem to be concentrated in meristems and buds. Beside the selection of the right compound it is also relevant to look for the optimal environmental conditions because there are several factors known that may affect the action of growth hormones, like (a) the concentration of the plant growth regulator itself, (b) the quantity applied to the plant, (c) the time of application in relation to flowering date, (d) temperature and humidity prior to and after treatment, (e) plant moisture content, and several others.

The mode of action of existing plant growth regulators often is not known. Various targets are discussed and among those, most of the affected molecules are involved in cell division regulation, like arresting the cell cycle in stage G1 or G2, respectively, others for signaling drought stress responses (Biochemistry & Molecular Biology of the Plant (2000); eds. Buchanan, Gruissem, Jones, pp. 558-560). In any case, the hormone control can be identified as an extremely complex cascade of up and down regulations which, for example, can lead to a growth stimulation of one organ or cell typus of a plant but also can lead to a repression in other organs or cell typus of the same plant.

In many cases, kinases are involved either directly or indirectly in plant hormone control and among the kinases, protein kinases are central and highly specific control molecules in respect to cell cycle control. Such kinases are discussed as targets for several plant hormones, like it is the case for auxin and abscisic acid (Biochemistry & Molecular Biology of the Plant (2000); eds. Buchanan, Gruissem, Jones, pp. 542-565 and pp. 980-985; Morgan (1997), Annu. Rev. Cell. Dev. Biol., 13, 261-291; Amon et al. (1993), Cell, 74, pp. 993-1007; Dynlacht et al. (1997), Nature, 389, pp. 149-152; Hunt and Nasmyth (1997), Curr. Opin. Cell. Biol., 9, pp. 765-767; Thomas and Hall (1997), Curr. Opin. Cell Biol., 9, pp. 782-787).

WO 99/02162, US 6,303,618, WO 02/059125 and L. Havlicek et al., (1997), J. Med. Chem., 40, 408-412 teach that certain purine derivatives act as inhibitors of cyclin dependent kinases (CDKs) and that such purine derivatives like certain 6-benzylamino-substituted purines, like the 6-(benzylamino)-2-[2-hydroxyethyl)amino]-9-methyl-purine ("Olomoucine") and 6-(benzylamino)-2(R)-[[1-(hydroxymethyl)propyl]amino]-9-isopropylpurine ("Roscovitine") may be effective in pharmaceutical use, especially in treatment of tumours or other cell proliferation disorders of mammals but in none of the before mentioned publications it is taught or even suggested that plant growth can be stimulated by this class of compounds.

FR 1 405 548 discloses purine derivatives as plant growth regulators.

The present invention relates to the use of a compound for plant growth regulation, preferably by application of the compound to plants, to the seeds from which they grow or to the locus in which they grow, in an effective plant growth regulating, preferably non-phytotoxic amount, which compound is a 2-amino-6-oxypurine derivative of formula (I) or an agriculturally acceptable salt thereof: 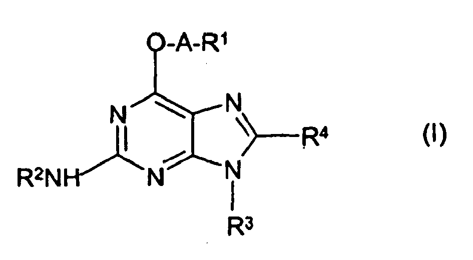 wherein:
A is (C₁-C₆)-alkylene or (C₁-C₆)-haloalkylene, in which groups a methylene moiety may be replaced by a group selected from -C(=O)-, -O- and -S-, with the proviso that the replacing group is not bonded to the adjacent O atom; or is (C₂-C₆)-alkenylene, (C₂-C₆)-haloalkenylene, (C₃-C₆)-alkynylene or (C₃-C₆)-haloalkynylene;
R¹ is H, (C₃-C₁₀)cycloalkyl or (C₅-C₁₀)cycloalkenyl, where each of the last 2 mentioned radicals is unsubstituted or substituted by one or more R⁵ radicals; or is (C₅-C₁₀)aryl or (3-10)heterocyclyl, where each of the last 2 mentioned radicals is unsubstituted or substituted by one or more R⁶ radicals;
R² is H, (C₁-C₃)alkyl or (C₁-C₃)haloalkyl;
R³ is H, CO-(C₁-C₃)alkyl, CO-(C₁-C₃)haloalkyl, CO₂-(C₁-C₃)alkyl, CONR²R^{2a} or COS-(C₁-C₃)alkyl;
R⁴ is H, halogen, (C₁-C₃)alkyl or (C₁-C₃)haloalkyl;
R⁵ is (C₁-C₆)alkyl, (C₁-C₆)haloalkyl, halogen, (C₁-C₆)alkoxy, (C₁-C₆)haloalkoxy, (C₁-C₆)alkylthio or (C₁-C₆)haloalkylthio;
R⁶ is (C₁-C₆)alkyl, (C₁-C₆)haloalkyl, (C₂-C₆)alkenyl, (C₂-C₆)haloalkenyl, (C₂-C₆)alkynyl, (C₂-C₆)haloalkynyl, halogen, (C₁-C₆)alkoxy, (C₁-C₆)haloalkoxy, (C₂-C₆)alkenyloxy, (C₂-C₆)haloalkenyloxy, (C₂-C₆)alkynyloxy, (C₂-C₆)haloalkynyloxy, S(O)ₘR⁷, CN, NO₂, OH, -(CH₂)ₙR⁸, COR⁹, NR¹⁰COR⁹, NR⁹SO₂R⁷, CONR⁹R¹⁰, NR⁹R¹⁰, S(O)ₚR⁸, OR⁸ or CO₂R⁷, or two adjacent OH groups may together with two adjacent carbon atoms of the heterocyclyl group form a 2-R¹¹, 2-R¹²-1,3-dioxolan-yl ring, or when R¹ is (3-10)heterocyclyl may also be oxo;
R⁷ is (C₁-C₆)alkyl or (C₁-C₆)haloalkyl;
R⁸ is phenyl unsubstituted or substituted by one or more radicals selected from the group consisting of (C₁-C₆)alkyl, (C₁-C₆)haloalkyl, halogen, (C₁-C₆)alkoxy, (C₁-C₆)haloalkoxy, S(O)ₘR⁷, CN and NO₂;
R⁹ and R¹⁰ are each independently H, (C₁-C₆)alkyl or (C₁-C₆)haloalkyl;
R¹¹ is H, (C₁-C₆)alkyl or phenyl;
R¹² is H or (C₁-C₆)alkyl; and
m, n and p are each independently 0, 1 or 2.

These compounds possess valuable plant growth regulatory properties.

The invention also encompasses any stereoisomer, enantiomer, geometric isomer or tautomer, and mixtures of the compounds of formula (I).

By the term " agriculturally acceptable salts" is meant salts the anions of which are known and accepted in the art for the formation of salts for agricultural use. Suitable acid addition salts, e.g. formed by compounds of formula (I) containing an amino group, include salts with inorganic acids, for example hydrochlorides, sulphates, phosphates and nitrates and salts with organic acids for example acetic acid.

In the present patent specification, including the accompanying claims, the aforementioned substituents have the following meanings:
Halogen means fluorine, chlorine, bromine or iodine.

The term "halo" before the name of a radical means that this radical is partially or completely halogenated, that is to say, substituted by F, Cl, Br, or I, in any combination.

The expression "(C₁-C₆)alkyl" means an unbranched or branched non-cyclic saturated hydrocarbon radical having 1, 2, 3, 4, 5 or 6 carbon atoms (indicated by a range of C-atoms in the parenthesis), such as, for example a methyl, ethyl, propyl, isopropyl, 1-butyl, 2-butyl, 2-methylpropyl or tert-butyl radical.

Alkyl radicals and also in composite groups, unless otherwise defined, preferably have 1 to 4 carbon atoms.

"(C₁-C₆)Haloalkyl" means an alkyl group mentioned under the expression "(C₁-C₆)alkyl" in which one or more hydrogen atoms are replaced by the same number of identical or different halogen atoms, such as monohaloalkyl, perhaloalkyl, CF₃, CHF₂, CH₂F, CHFCH₃, CF₃CH₂, CF₃CF₂, CHF₂CF₂, CH₂FCHCl, CH₂Cl, CCl₃, CHCl₂ or CH₂CH₂Cl.

The expression "(C₁-C₆)-alkylene" is to be understood as meaning an unbranched or branched saturated carbon chain having from 1 to 6 carbon atoms.

The expression "(C₁-C₆)-haloalkylene" is to be understood as meaning an unbranched or branched saturated carbon chain having from 1 to 6 carbon atoms, in which one or more hydrogen atoms are replaced by the same number of identical or different halogen atoms.

The expression "(C₂-C₆)-alkenylene" is to be understood as meaning an unbranched or branched saturated carbon chain having from 2 to 6 carbon atoms, and which contains at least one double bond which can be located in any position of the respective unsaturated radical.

The expression "(C₃-C₆)-alkynylene" is to be understood as meaning an unbranched or branched saturated carbon chain having from 3 to 6 carbon atoms, and which contains one or two triple bonds which can be located in any position of the respective unsaturated radical.

"(C₁-C₆)Alkoxy" means an alkoxy group whose carbon chain has the meaning given under the expression "(C₁-C₆)alkyl". "Haloalkoxy" is, for example, OCF₃, OCHF₂, OCH₂F, CF₃CF₂O, OCH₂CF₃ or OCH₂CH₂Cl.

"(C₂-C₆)Alkenyl" means an unbranched or branched non-cyclic carbon chain having a number of carbon atoms which corresponds to this stated range and which contains at least one double bond which can be located in any position of the respective unsaturated radical. "(C₂-C₆)Alkenyl" accordingly denotes, for example, the vinyl, allyl, 2-methyl-2-propenyl, 2-butenyl, pentenyl, 2-methylpentenyl or the hexenyl group.

"(C₂-C₆)Alkynyl" means an unbranched or branched non-cyclic carbon chain having a number of carbon atoms which corresponds to this stated range and which contains one triple bond which can be located in any position of the respective unsaturated radical. "(C₂-C₆)Alkynyl" accordingly denotes, for example, the propargyl, 1-methyl-2-propynyl, 2-butynyl or 3-butynyl group.

"(C₃-C₁₀)Cycloalkyl" is a carbocyclic, saturated ring system having preferably 3-10 ring carbon atoms, for example, cyclopropyl, cyclobutyl, cyclopentyl, cyclohexyl, cycloheptyl or cyclooctyl. In the case of substituted cycloalkyl, this encompasses cyclic systems with substituents, where the substituents are bonded to the cycloalkyl radical by a double bond, for example, an alkylidene group such as methylidene. In the case of substituted cycloalkyl, this also encompasses polycyclic aliphatic fused or bridged systems such as, for example, bicyclo[2.1.0]pentan-1-yl, bicyclo[2.1.0]pentan-2-yl, bicyclo[2.1.0]pentan-5-yl, bicyclo[3.1.1]heptan-1-yl, adamant-1-yl and adamant-2-yl.

"(C₅-C₁₀)cycloalkyl" ring system is corresponding to cycloalkyl having 5 to10 ring C-atoms.

"(C₅-C₁₀)Cycloalkenyl" is a carbocyclic, nonaromatic, partially unsaturated ring system having preferably 5-10 ring carbon atoms, for example 1-cyclopentenyl, 2-cyclopentenyl, 1-cyclohexenyl, 2-cyclohexenyl, 3-cyclohexenyl, 1,3-cyclohexadienyl,1,4-cyclohexadienyl, 1, 2, 3, 4-tetrahydronaphthyl, 1, 4-dihydronaphthyl and the like. In the case of substituted cycloalkenyl, what has been said for substituted cycloalkyl applies analogously, including for example bicyclo[2.2.1]hept-2-enyl.

The term "(C₅-C₁₀)aryl" means a carbocyclic aromatic ring system having preferably 5-10 ring carbon atoms, such as phenyl, biphenyl, naphthyl, anthracenyl, phenanthrenyl, fluorenyl, indenyl, pentalenyl, azulenyl, biphenylenyl and the like..

A "(3-10)heterocyclyl" group can be saturated, unsaturated or heteroaromatic, having preferably 3-10 ring atoms and includes fused and spiro systems; it preferably contains one or more, in particular 1, 2 or 3, hetero atoms in the heterocyclic ring, preferably selected from the group consisting of N, O and S; it is preferably an aliphatic heterocyclyl radical having 3 to 7 ring atoms or a heteroaromatic radical having 5 to 7 ring atoms. The heterocyclyl radical can be, for example, a heteroaromatic radical or ring (heteroaryl) such as, for example, a mono-, bi- or polycyclic aromatic system in which at least 1 ring contains one or more hetero atoms, for example pyridyl, pyrimidinyl, pyridazinyl, pyrazinyl, triazinyl, thienyl, thiazolyl, thiadiazolyl, oxazolyl, isoxazolyl, furyl, pyrrolyl, pyrazolyl, imidazolyl, 1, 2, 4-triazolyl, 1,2,3-triazolyl, benzimidazolyl, benzthienyl, benzfuryl, quinolinyl, isoquinolinyl, 1, 3, 4-oxadiazolyl or 1, 3, 4-thiadiazolyl, or it is a partially or fully hydrogenated radical such as oxiranyl, oxetanyl, oxolanyl (= tetrahydrofuryl), oxanyl, pyrrolidinyl, piperidinyl, piperazinyl, benzo-l,3-dioxolanyl, 1,3-dioxolanyl, oxazolinyl, isoxazolinyl, oxazolidinyl, isoxazolidinyl, morpholinyl, 1,3-dioxanyl, 1,4-dioxanyl, benz-1,4-dioxanyl, dihydropyranyl, tetrahydropyranyl or oxetanyl. When an oxo group is present as a substituent it may be bonded to a ring carbon atom or at those hetero ring atoms where various oxidation numbers are possible, for example in the case of N and S.

Preferably A is (C₁-C₃)-alkylene, (C₁-C₃)-haloalkylene or (C₂-C₃)-alkenylene (more preferably A is -CH₂-, -CH₂CH₂-, -CH(CH₃)-, -CH(CH₃)CH₂- or -CH₂CH(CH₃)-;

Preferably R¹ is (C₃-C₁₀)cycloalkyl, preferably (C₅-C₁₀)cycloalkyl, or (C₅-C₁₀)cycloalkenyl, which radicals are unsubstituted or substituted by one or more radicals selected from (C₁-C₆)alkyl, (C₁-C₆)haloalkyl, halogen, (C₁-C₆)alkoxy, (C₁-C₆)haloalkoxy, (C₁-C₆)alkylthio and (C₁-C₆)haloalkylthio ;
or is (C₅-C₁₀)aryl or (3-10)heterocyclyl, where each of the last 2 mentioned radicals is unsubstituted or substituted by one or more radicals selected from (C₁-C₆)alkyl, (C₁-C₆)haloalkyl, (C₂-C₆)alkenyl, (C₂-C₆)haloalkenyl, (C₂-C₆)alkynyl, (C₂-C₆)haloalkynyl, halogen, (C₁-C₆)alkoxy, (C₁-C₆)haloalkoxy, (C₂-C₆)alkenyloxy, (C₂-C₆)haloalkenyloxy, (C₂-C₆)alkynyloxy, (C₂-C₆)haloalkynyloxy, S(O)ₘR⁷,-(CH₂)ₙR⁸, S(O)ₚR⁸ and OR⁸, or two adjacent OH groups may together with two adjacent carbon atoms of the heterocyclyl group form a 2-R¹¹, 2-R¹²-1,3-dioxolan-yl ring, or when R¹ is (C₅-C₁₀)heterocyclyl may also be oxo.

More preferably R¹ is cyclopentyl, cyclohexyl, cyclopentenyl or cyclohexenyl, which rings are optionally fused to a second cyclopentyl, cyclohexyl, cyclopentenyl or cyclohexenyl ring, which ring may be the same or different, and which rings are unsubstituted or substituted by one or more radicals selected from the group consisting of (C₁-C₆)alkyl, (C₁-C₆)haloalkyl, halogen, (C₁-C₆)alkoxy, (C₁-C₆)haloalkoxy, (C₁-C₆)alkylthio and (C₁-C₆)haloalkylthio;
or is cycloheptanyl, cyclooctanyl, cycloheptenyl, cyclooctenyl, bicyclo[2.2.1]heptenyl or bicyclo[2.2.1]heptanyl where each of the last 6 mentioned rings is unsubstituted or substituted by one or more (C₁-C₆)alkyl radicals;
or is phenyl, naphthyl, pyridyl, thienyl, benzthienyl, furyl, isoxazolyl or imidazolyl where each of the last 8 mentioned radicals is unsubstituted or substituted by one or more radicals selected from the group consisting of (C₁-C₆)alkyl, (C₁-C₆)haloalkyl, (C₂-C₆)alkenyl, (C₂-C₆)haloalkenyl, (C₂-C₆)alkynyl, (C₂-C₆)haloalkynyl, halogen, (C₁-C₆)alkoxy and S(O)ₘR⁷;
or is dihydropyranyl, tetrahydropyranyl, tetrahydrofuryl, 1,3-dioxolanyl, 1,4-benzodioxanyl, pyrrolidinyl or oxetanyl where each of the last 7 mentioned rings is unsubstituted or substituted by one or more radicals selected from the group consisting of (C₁-C₆)alkyl, (C₁-C₆)haloalkyl, (C₂-C₆)alkenyl, halogen, (C₁-C₆)alkoxy, (C₂-C₆)alkenyloxy, S(O)ₘR⁷ and -(CH₂)ₙR⁸;
or is tetrahydropyranyl fused to a 2-R¹¹, 2-R¹²-1,3-dioxolan-yl ring;
or is adamantyl.

Yet more preferably R¹ is cyclopentyl, cyclohexyl, cyclopentenyl or cyclohexenyl which rings are unsubstituted or substituted by one or more radicals selected from the group consisting of (C₁-C₆)alkyl, (C₁-C₆)haloalkyl, halogen, (C₁-C₆)alkoxy, (C₁-C₆)haloalkoxy, (C₁-C₆)alkylthio and (C₁-C₆)haloalkylthio;
or is cyclooctanyl, bicyclo[2.2.1]heptenyl or bicyclo[2.2.1]heptanyl where each of the last 3 mentioned rings is unsubstituted or substituted by one or more (C₁-C₆)alkyl radicals;
or is phenyl, naphthyl, pyridyl, thienyl, benzthienyl, furyl, isoxazolyl or imidazolyl, where each of the last 8 mentioned rings is unsubstituted or substituted by one or more radicals selected from the group consisting of (C₁-C₆)alkyl, (C₁-C₆)haloalkyl, (C₂-C₆)alkenyl, halogen, (C₁-C₆)alkoxy, (C₂-C₆)alkenyloxy, S(O)ₘR⁷ and -(CH₂)ₙR⁸; or is dihydropyranyl, tetrahydropyranyl, tetrahydrofuryl, 1,3-dioxolanyl, 1,4-benzodioxanyl, pyrrolidinyl or oxetanyl where each of the last 7 mentioned rings is unsubstituted or substituted by one or more radicals selected from the group consisting of (C₁-C₆)alkyl, (C₁-C₆)haloalkyl, (C₂-C₆)alkenyl, halogen and (C₁-C₆)alkoxy;
or is tetrahydropyranyl fused to a 1,3-dioxolan-yl ring;
or is adamantyl.

Most preferably R¹ is cyclopentyl, cyclohexyl, cyclopentenyl, cyclohexenyl, phenyl, naphthyl, pyridyl, thienyl, benzthienyl, furyl, isoxazolyl or imidazolyl tetrahydropyranyl, tetrahydrofuryl, dihydropyranyl, tetrahydropyranyl, tetrahydrofuryl, 1,3-dioxolanyl, 1,4-benzodioxanyl, pyrrolidinyl or oxetanyl where each of the last 12 mentioned radicals is unsubstituted or substituted by one or more radicals selected from the group consisting of (C₁-C₃)alkyl, (C₁-C₃)haloalkyl, halogen and (C₁-C₃)alkoxy;
or is cyclooctanyl, bicyclo[2.2.1]heptenyl, bicyclo[2.2.1]heptanyl, dihydropyranyl, tetrahydropyranyl, tetrahydrofuryl, 1,3-dioxolanyl, 1,4-benzodioxanyl, pyrrolidinyl or oxetanyl where each of the last 10 mentioned rings is unsubstituted or substituted by one or more (C₁-C₆)alkyl radicals;
or is tetrahydropyranyl fused to a 1,3-dioxolan-yl ring;
or is adamantyl.

Preferably R² is H.

Preferably R³ is H, COCH₃, COCF₃ or CO₂CH₃ (more preferably R³ is H).

Preferably R⁴ is H, methyl or trifluoromethyl (more preferably R⁴ is H).

A preferred class of compounds of formula (I) for use in the present invention are those in which:
A is (C₁-C₃)-alkylene, (C₁-C₃)-haloalkylene or (C₂-C₃)-alkenylene;
R¹ is (C₅-C₁₀)cycloalkyl or (C₅-C₁₀)cycloalkenyl, which radicals are unsubstituted or substituted by one or more radicals selected from (C₁-C₆)alkyl, (C₁-C₆)haloalkyl, halogen, (C₁-C₆)alkoxy, (C₁-C₆)haloalkoxy, (C₁-C₆)alkylthio and (C₁-C₆)haloalkylthio; or is (C₅-C₁₀)aryl or (C₅-C₁₀)heterocyclyl, where each of the last 2 mentioned radicals is unsubstituted or substituted by one or more radicals selected from (C₁-C₆)alkyl, (C₁-C₆)haloalkyl, (C₂-C₆)alkenyl, (C₂-C₆)haloalkenyl, (C₂-C₆)alkynyl, (C₂-C₆)haloalkynyl, halogen, (C₁-C₆)alkoxy, (C₁-C₆)haloalkoxy, (C₂-C₆)alkenyloxy, (C₂-C₆)haloalkenyloxy, (C₂-C₆)alkynyloxy, (C₂-C₆)haloalkynyloxy, S(O)ₘR⁷,-(CH₂)ₙR⁸, S(O)ₚR⁸ and OR⁸, or two adjacent OH groups may together with two adjacent carbon atoms of the heterocyclyl group form a 2R¹¹, 2R¹²-1,3-dioxolan-yl ring, or when R¹ is (3-10)heterocyclyl may also be oxo;
R² is H;
R³ is H, COCH₃, COCF₃ or CO₂CH₃; and
R⁴ is H, methyl or trifluoromethyl.

A more preferred class of compounds of formula (I) for use in the present invention are those in which:
A is (C₁-C₃)alkylene, (C₁-C₃)haloalkylene or (C₂-C₃)alkenylene;
R¹ is cyclopentyl, cyclohexyl, cyclopentenyl or cyclohexenyl, which rings are optionally fused to a second cyclopentyl, cyclohexyl, cyclopentenyl or cyclohexenyl ring, which ring may be the same or different, and which rings are unsubstituted or substituted by one or more radicals selected from the group consisting of (C₁-C₆)alkyl, (C₁-C₆)haloalkyl, halogen, (C₁-C₆)alkoxy, (C₁-C₆)haloalkoxy, (C₁-C₆)alkylthio and (C₁-C₆)haloalkylthio;
or is cycloheptanyl, cyclooctanyl, cycloheptenyl, cyclooctenyl, bicyclo[2.2.1]heptenyl or bicyclo[2.2.1]heptanyl where each of the last 6 mentioned rings is unsubstituted or substituted by one or more (C₁-C₆)alkyl radicals;
or is phenyl, naphthyl, pyridyl, thienyl, benzthienyl, furyl, isoxazolyl or imidazolyl where each of the last 8 mentioned radicals is unsubstituted or substituted by one or more radicals selected from the group consisting of (C₁-C₆)alkyl, (C₁-C₆)haloalkyl, (C₂-C₆)alkenyl, (C₂-C₆)haloalkenyl, (C₂-C₆)alkynyl, (C₂-C₆)haloalkynyl, halogen, (C₁-C₆)alkoxy and S(O)ₘR⁷;
or is dihydropyranyl, tetrahydropyranyl, tetrahydrofuryl, 1,3-dioxolanyl, 1,4-benzodioxanyl, pyrrolidinyl or oxetanyl where each of the last 7 mentioned rings is unsubstituted or substituted by one or more radicals selected from the group consisting of (C₁-C₆)alkyl, (C₁-C₆)haloalkyl, (C₂-C₆)alkenyl, halogen, (C₁-C₆)alkoxy, (C₂-C₆)alkenyloxy, S(O)ₘR⁷ and -(CH₂)ₙR⁸;
or is tetrahydropyranyl fused to a 2-R¹¹, 2-R¹²-1,3-dioxolan-yl ring;
or is adamantyl;
R² is H;
R³ is H, COCH₃, COCF₃ or CO₂CH₃; and
R⁴ is H, methyl or trifluoromethyl.

A yet more preferred class of compounds of formula (I) for use in the present invention are those in which:
A is (C₁-C₃)alkylene, (C₁-C₃)haloalkylene or (C₂-C₃)alkenylene;
R¹ is cyclopentyl, cyclohexyl, cyclopentenyl or cyclohexenyl which rings are unsubstituted or substituted by one or more radicals selected from the group consisting of (C₁-C₆)alkyl, (C₁-C₆)haloalkyl, halogen, (C₁-C₆)alkoxy.
(C₁-C₆)haloalkoxy, (C₁-C₆)alkylthio and (C₁-C₆)haloalkylthio;
or is cyclooctanyl, bicyclo[2.2.1]heptenyl or bicyclo[2.2.1]heptanyl where each of the last 3 mentioned rings is unsubstituted or substituted by one or more (C₁-C₆)alkyl radicals;
or is phenyl, naphthyl, pyridyl, thienyl, benzthienyl, furyl, isoxazolyl or imidazolyl, where each of the last 8 mentioned rings is unsubstituted or substituted by one or more radicals selected from the group consisting of (C₁-C₆)alkyl, (C₁-C₆)haloalkyl, (C₂-C₆)alkenyl, halogen, (C₁-C₆)alkoxy, (C₂-C₆)alkenyloxy, S(O)ₘR⁷ and -(CH₂)ₙR⁸; or is dihydropyranyl, tetrahydropyranyl, tetrahydrofuryl, 1,3-dioxolanyl, 1,4-benzodioxanyl, pyrrolidinyl or oxetanyl where each of the last 7 mentioned rings is unsubstituted or substituted by one or more radicals selected from the group consisting of (C₁-C₆)alkyl, (C₁-C₆)haloalkyl, (C₂-C₆)alkenyl, halogen and (C₁-C₆)alkoxy;
or is tetrahydropyranyl fused to a 1,3-dioxolan-yl ring;
or is adamantyl;
R² is H;
R³ is H, COCH₃, COCF₃ or CO₂CH₃; and
R⁴ is H, methyl or trifluoromethyl.

A most preferred class of compounds of formula (I) for use in the present invention are those in which:
A is -CH₂-, -CH₂CH₂-, -CH(CH₃)-, -CH(CH₃)CH₂- or -CH₂CH(CH₃)-;
R¹ is cyclopentyl, cyclohexyl, cyclopentenyl, cyclohexenyl, phenyl, naphthyl, pyridyl, thienyl, benzthienyl, furyl, isoxazolyl or imidazolyl tetrahydropyranyl, tetrahydrofuryl, dihydropyranyl, tetrahydropyranyl, tetrahydrofuryl, 1,3-dioxolanyl, 1,4-benzodioxanyl, pyrrolidinyl or oxetanyl where each of the last 12 mentioned radicals is unsubstituted or substituted by one or more radicals selected from the group consisting of (C₁-C₃)alkyl, (C₁-C₃)haloalkyl, halogen and (C₁-C₃)alkoxy;
or is cyclooctanyl, bicyclo[2.2.1]heptenyl, bicyclo[2.2.1]heptanyl, dihydropyranyl, tetrahydropyranyl, tetrahydrofuryl, 1,3-dioxolanyl, 1,4-benzodioxanyl, pyrrolidinyl or oxetanyl where each of the last 10 mentioned rings is unsubstituted or substituted by one or more (C₁-C₆)alkyl radicals;
or is tetrahydropyranyl fused to a 1,3-dioxolan-yl ring;
or is adamantyl; and
R², R³ and R⁴ are each H.

Compounds of formula (I) above may be prepared by the application or adaptation of known methods (i.e. methods heretofore used or described in the literature).

In the following description where symbols appearing in formulae are not specifically defined, it is to be understood that they are "as hereinbefore defined" in accordance with the first definition of each symbol in the specification.

It is to be understood that in the descriptions of the following processes the sequences may be performed in different orders, and that suitable protecting groups may be required to achieve the compounds sought.

According to a feature of the invention compounds of formula (I) wherein E, W and Q are as defined above, may be prepared by the reaction of a compound of formula (II): 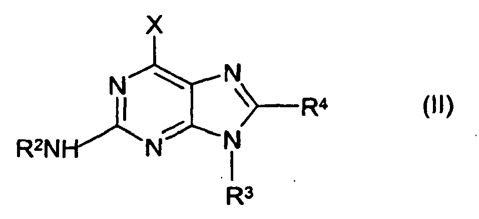 wherein R², R³ and R⁴ are as defined above, and X is a leaving group such as halogen (preferably chloro or bromo) or a trialkylammonium cation such as trimethylammonium, or a sulfonate such as 4-toluenesulfonyl, with a compound of formula (III):

R¹-A-OH (III)

wherein A and R¹ are as defined above. The reaction is generally performed in the presence of a base such as sodium, sodium hydride or an alkali metal alkoxide such as potassium tert butoxide, in an inert solvent such as tetrahydrofuran, dioxan or N,N-dimethylformamide, at a temperature of from 20°C to the reflux temperature of the solvent, preferably from 50°C to 120°C. The compound of formula (III) is preferably reacted with the base in order to effect deprotonation, before the addition of the compound of formula (II) and thereby avoid the possibility of the base reacting with (II).

Intermediate compounds of formula (II) wherein X is halogen are known or may be prepared according to known methods, for example as described in US patent publication number US 6303618, or by Vasella in Chem. Commun. 12, 2003, 1452.

Compounds of formula (III) are known or may be prepared according to known methods, for example by reduction of the corresponding aldehyde using for example sodium borohydride in a solvent such as ethanol, as described by J.S.Cha et al. in J.Org.Chem. 66 (22), 2001, 7514.

A collection of compounds of formula (I) which can be synthesized by the abovementioned processes can additionally be prepared in parallel fashion, which can be effected manually, partly automated or fully automated. In this context, it is possible to automate the procedure of the reaction, work-up or purification of the products or intermediates. In total, this is to be understood as meaning a procedure which is described, for example, by S. H. DeWitt in "Annual Reports in Combinatorial Chemistry and Molecular Diversity: Automated Synthesis", Volume 1, published by Escom, 1997, pages 69 to 77.

For carrying out the reaction and work-up in parallel fashion, a series of commercially available apparatuses can be used as they are available from, for example, Stem Corporation, Woodrolfe Road, Tollesbury, Essex, CM9 8SE, England or Radleys Discovery Technologies, Saffron Walden, Essex, CB11 3AZ, ENGLAND. To carry out the parallel purification of compounds (I) or of intermediates obtained during the preparation, there are available, inter alia, chromatographic equipment, for example from ISCO, Inc., 4700 Superior Street, Lincoln, NE 68504, USA. The equipment mentioned makes possible a modular procedure, where the individual steps are automated, but manual operation has to be carried out between the steps. This can be circumvented by employing partly or fully integrated automation systems, in which the automation modules in question are operated by, for example, robots. Such automation systems can be obtained from, for example, Zymark Corporation, Zymark Center, Hopkinton, MA 01748, USA.

In addition to the above-described methods, compounds of formula (I) can be prepared in full or partly by solid-phase supported methods. To this end, individual intermediates or all intermediates of the synthesis or of a synthesis adapted to the procedure in question are bound to a synthesis resin. Solid-phase supported synthetic methods are described extensively in the specialist literature, for example: Barry A. Bunin in "The Combinatorial Index", published by Academic Press, 1998. The use of solid-phase supported synthesis methods permits a series of protocols known from the literature which, in turn, can be carried out manually or in an automated fashion. For example, the "teabag method" (Houghten, US 4,631,211; Houghten et al., Proc. Natl. Acad. Sci., 1985, 82, 5131 - 5135) can be partly automated with products of IRORI, 11149 North Torrey Pines Road, La Jolla, CA 92037, USA. Solid-phase supported parallel synthesis can be automated successfully for example using equipment by Argonaut Technologies, Inc., 887 Industrial Road, San Carlos, CA 94070, USA or MultiSynTech GmbH, Wullener Feld 4, 58454 Witten, Germany.

The preparation in accordance with the processes described herein yields compounds of formula (I) in the form of substance collections or substance libraries. Subject matter of the present invention are therefore also libraries of the compounds of formula (I) which contain at least two compounds of formula (I), and of their precursors.

The following non-limiting Examples illustrate the preparation of the compounds of formula (I).

### A. Chemical Examples

In the Examples which follow, quantities (also percentages) are weight based unless stated otherwise. Ratios of solvents are volume based.

### Example 1

### O6-Adamantylmethyl-9H-purin-2-ylamine (Compound 1.1)

Sodium hydride (150 mg, 2 eq, 5 mmol) was added at 0°C to a solution of 1-adamantanemethanol (1.039 g, 6.3 mmol) in anhydrous tetrahydrofuran (20 ml), and the mixture stirred under argon at 20°C for 1 hour. 2-Amino-6-chloropurine (0.424 g, 2.5 mmol) was then added and the mixture heated at reflux for 2 days. The cooled mixture was neutralised with glacial acetic acid (2 ml), evaporated and purified by column chromatography eluting with 10% methanol in dichloromethane, to give the title compound (0.141 g, 17.9 % yield), as a cream solid, mp 260°C; 1 H NMR (d6 - DMSO) 1.92 (16H, m), 4.11 (2H, s), 6.35 (2H, s), 7.90 (1 H, s), 12.46 (1H, br s).

### Example 2

### 2-Amino-6-[(S)-2',2'-dimethyl-1',3'-dioxolane-5'-methyloxy]purine (Compound 1.17)

Sodium hydride (150 mg, 2 eq, 5 mmol) was added at 0°C to a solution of (S)-2,2-dimethyl-1,3-dioxolane-5-methanol (0.852 g, 6.3 mmol) in anhydrous tetrahydrofuran (20 ml), and the mixture stirred under argon at 20°C for 1 hour. 2-Amino-6-chloropurine (0.424 g, 2.5 mmol) was then added and the mixture heated at reflux for 3 days. The cooled mixture was neutralised with glacial acetic acid (2 ml), evaporated and purified by column chromatography eluting with 10% methanol in dichloromethane, to give the title compound (0.423 g, yield 61.8 %), as a cream solid, mp 187°C; 1H NMR (d6 -DMSO) 1.411 (6H, d), 3.904 (1H, m), 4.200 (1H, m), 4.596 (3H, m), 6.370 (2H, br-s), 7.946 (1H, s), 12.600 (1 H, br-s).

By proceeding in a similar manner but starting from 1,4-benzodioxanyl-2-methanol there was prepared 2-amino-6-[1',4'-benzodioxanyl-2'-methyloxy]purine (Compound 1.3, 67.9% yield) as a cream solid, mp 146°C; 1H NMR (d6 -DMSO) 4.252 (1H, m), 4.510 (1H, m), 4.797 (3H, m), 6.401 (2H, br-s), 7.001 (4H, m), 7.959 (1H, s), 12.592 (1 H, br-s).

### Example 3

### O6-(3'-Cyclohexenylmethyl)-9H-purin-2-ylamine (Compound 1.24)

Sodium hydride (150 mg, 2 eq, 5 mmol) was added at 0°C to a solution of 3-cyclohexene methanol (0.721 g, 6.3 mmol) in anhydrous tetrahydrofuran (20 ml), and the mixture stirred under argon at 20°C for 1 hour. 2-Amino-6-chloropurine (0.424 g, 2.5 mmol) was then added and the mixture heated at reflux for 3 days. The cooled mixture was neutralised with glacial acetic acid (2 ml), evaporated and purified by column chromatography eluting with 10% methanol in dichloromethane, to give the title compound (0.323 g, 48.4 % yield) as a white crystalline solid, mp 176-177°C, NMR 1H (d6 -DMSO) 12.35 (1 H, br s), 7.76 (1H, s), 6.15 (2H, s), 5.70 (2H, s), 4.30 (2H, d), 2.10-1.85 (6H, 3m), 1.40 (1H, m).

The following preferred compounds of formula (I) shown in Tables 1 to 7 also form part of the present invention, and are obtained by, or analogously to, the above Examples 1 to 3 or the above-described general methods.

The following abbreviations are used in the Tables:
"Cpd" means Compound Number. Compound numbers are given for reference purposes only. "Ph" means phenyl and "Me" means methyl.
"Dec." means the compound decomposes before the melting point.
Rf means retention time determined from thin layer chromatography on silica gel, using 10% MeOH in CH₂Cl₂ as eluent.

**Table 1: Compounds of formula (I) wherein A is CH₂:**

| Cpd | R¹ | R² | R³ | R⁴ | mp °C | Rf |
|---|---|---|---|---|---|---|
| 1.1 | adamantan-1-yl | H | H | H | 260 | 0.39 |
| 1.2 | CH(OMe)Ph | H | H | H | 135 | 0.4 |
| 1.3 | 1,4-benzodioxan-2-yl | H | H | H | 146 | 0.21 |
| 1.4 | CH₂OPh | H | H | H | 162 | 0.39 |
| 1.5 | -CH(Me)-(4-Me-cyclohex-3-enyl) | H | H | H | dec. | 0.36 |
| 1.6 | (4S)-4-isopropenyl-cyclohex-1-enyl | H | H | H | 190 | 0.33 |
| 1.7 | 4-(CH₂OCH=CH2)-cyclohex-1-yl | H | H | H | dec. | 0.30 |
| 1.8 | oct-2-ynyl | H | H | H | dec. | 0.31 |
| 1.9 | 4-CF₃-Ph | H | H | H | dec. | 0.19 |
| 1.10 | 4-(CH₃)₂CH-Ph | H | H | H | dec. | 0.35 |
| 1.11 | 3-thienyl | H | H | H | dec. | 0.41 |
| 1.12 | 3-Me-oxetan-3-yl | H | H | H | dec. | 0.22 |
| 1.13 | CH(CH₃)Ph | H | H | H | dec. | 0.34 |
| 1.14 | 5-Me-[1,3]dioxan-5-yl | H | H | H | dec. | 0.37 |
| 1.15 | (1-Me-pyrrolidin-2-yl)-CH₂ | H | H | H | dec. | 0.03 |
| 1.16 | 3,4-dihydro-2*H*-pyran-2-yl | H | H | H | 137 | 0.27 |
| 1.17 | D-(4R)-(2,2-DiMe-[1,3]dioxolan-4-yl | H | H | H | 187 | 0.14 |
| 1.18 | cyclooctyl | H | H | H | dec. | 0.22 |
| 1.19 | 2-pyridyl-CH₂CH₂ | H | H | H | dec. | 0.18 |
| 1.20 | (a) | H | H | H | 153 | 0.31 |
| 1.21 | bicyclo[2.2.1]hept-5-en-2-yl | H | H | H | dec. | 0.24 |
| 1.22 | 3,5-diMe-isoxazol-4-yl | H | H | H | dec. | 0.25 |
| 1.23 | 6,6-diMe-bicyclo[3.1.1]hept-2-yl | H | H | H | dec. | 0.34 |
| 1.24 | cyclohex-3-en-1-yl | H | H | H | 176 | 0.35 |
| 1.25 | 4-CHF₂O-Ph | H | H | H | dec. | 0.33 |
| 1.26 | 3-Me-benzo[b]thiophen-2-yl | H | H | H | dec. | 0.35 |
| 1.27 | 3-(4-Cl-Ph)-furan-2-yl | H | H | H | dec. | 0.43 |
| 1.28 | 4-(PhCH₂O)Ph- | H | H | H | dec. | 0.67 |
| 1.29 | 2-(4-F-PhCH₂S)-1-Me-1*H*-imidazol-5-yl | H | H | H | dec. | 0.68 |
| 1.30 | benzo[d]imidazo[2,1-b]thiazol-2-yl | H | H | H | dec. | 0.21 |
| 1.31 | benzofuran-2-yl | H | H | H | dec. | 0.43 |
| 1.32 | 6-Cl-pyridin-3-yl | H | H | H | dec. | 0.3 |
| 1.33 | Ph | H | H | H | | |

| | | | | | | |
|---|---|---|---|---|---|---|
| Note (a) is a formula (IV) which is bonded to A at the 2-pyranyl carbon atom: 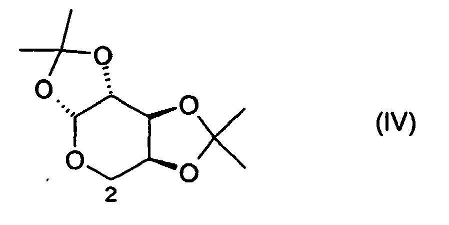 | | | | | | |

**Table 2: Compounds of formula (I) wherein A is CH(Me) and (a) is a formula (IV) as defined above:**

| Cpd | R¹ | R² | R³ | R⁴ | mp °C | Rf |
|---|---|---|---|---|---|---|
| 2.1 | adamantan-1-yl | H | H | H | | |
| 2.2 | CH(OMe)Ph | H | H | H | | |
| 2.3 | 1,4-benzodioxan-2-yl | H | H | H | | |
| 2.4 | CH₂OPh | H | H | H | | |
| 2.5 | -CH(Me)-(4-Me-cyclohex-3-enyl) | H | H | H | | |
| 2.6 | (4S)-4-isopropenyl-cyclohex-1-enyl | H | H | H | | |
| 2.7 | 4-(CH₂OCH=CH2)-cyclohex-1-yl | H | H | H | | |
| 2.8 | oct-2-ynyl | H | H | H | | |
| 2.9 | 4-CF₃-Ph | H | H | H | | |
| 2.10 | 4-(CH₃)₂CH-Ph | H | H | H | | |
| 2.11 | 3-thienyl | H | H | H | | |
| 2.12 | 3-Me-oxetan-3-yl | H | H | H | | |
| 2.13 | CH(CH₃)Ph | H | H | H | | |
| 2.14 | 5-Me-[1,3]dioxan-5-yl | H | H | H | | |
| 2.15 | (1-Me-pyrrolidin-2-yl)-CH₂ | H | H | H | | |
| 2.16 | 3,4-dihydro-2*H*-pyran-2-yl | H | H | H | | |
| 2.17 | D-(4R)-(2,2-DiMe-[1,3]dioxolan-4-yl | H | H | H | | |
| 2.18 | cyclooctyl | H | H | H | | |
| 2.19 | 2-pyridyl-CH₂CH₂ | H | H | H | | |
| 2.20 | (a) | H | H | H | | |
| 2.21 | bicyclo[2.2.1]hept-5-en-2-yl | H | H | H | | |
| 2.22 | 3,5-diMe-isoxazol-4-yl | H | H | H | | |
| 2.23 | 6,6-diMe-bicyclo[3.1.1]hept-2-yl | H | H | H | | |
| 2.24 | cyclohex-3-en-1-yl | H | H | H | | |
| 2.25 | 4-CHF₂O-Ph | H | H | H | | |
| 2.26 | 3-Me-benzo[b]thiophen-2-yl | H | H | H | | |
| 2.27 | 3-(4-Cl-Ph)-furan-2-yl | H | H | H | | |
| 2.28 | 4- (PhCH₂O)Ph- | H | H | H | | |
| 2.29 | 2-(4-F-PhCH₂S)-1-Me-1*H*-imidazol-5-yl | H | H | H | | |
| 2.30 | benzo[d]imidazo[2,1-b]thiazol-2-yl | H | H | H | | |
| 2.31 | benzofuran-2-yl | H | H | H | | |
| 2.32 | 6-Cl-pyridin-3-yl | H | H | H | | |
| 2.33 | Ph | H | H | H | | |

**Table 3: Compounds of formula (I) wherein A is CH₂CH₂ and (a) is a formula (IV) as defined above:**

| Cpd | R¹ | R² | R³ | R⁴ | mp °C | Rf |
|---|---|---|---|---|---|---|
| 3.1 | adamantan-1-yl | H | H | H | | |
| 3.2 | CH(OMe)Ph | H | H | H | | |
| 3.3 | 1,4-benzodioxan-2-yl | H | H | H | | |
| 3.4 | CH₂OPh | H | H | H | | |
| 3.5 | -CH(Me)-(4-Me-cyclohex-3-enyl) | H | H | H | | |
| 3.6 | (4S)-4-isopropenyl-cyclohex-1-enyl | H | H | H | | |
| 3.7 | 4-(CH₂OCH=CH2)-cyclohex-1-yl | H | H | H | | |
| 3.8 | oct-2-ynyl | H | H | H | | |
| 3.9 | 4-CF₃-Ph | H | H | H | | |
| 3.10 | 4-(CH₃)₂CH-Ph | H | H | H | | |
| 3.11 | 3-thienyl | H | H | H | | |
| 3.12 | 3-Me-oxetan-3-yl | H | H | H | | |
| 3.13 | CH(CH₃)Ph | H | H | H | | |
| 3.14 | 5-Me-[1,3]dioxan-5-yl | H | H | H | | |
| 3.15 | (1-Me-pyrrolidin-2-yl)-CH₂ | H | H | H | | |
| 3.16 | 3,4-dihydro-2*H*-pyran-2-yl | H | H | H | | |
| 3.17 | D-(4R)-(2,2-DiMe-[1,3]dioxolan-4-yl | H | H | H | | |
| 3.18 | cyclooctyl | H | H | H | | |
| 3.19 | 2-pyridyl-CH₂CH₂ | H | H | H | | |
| 3.20 | (a) | H | H | H | | |
| 3.21 | bicyclo[2.2.1]hept-5-en-2-yl | H | H | H | | |
| 3.22 | 3,5-diMe-isoxazol-4-yl | H | H | H | | |
| 3.23 | 6,6-diMe-bicyclo[3.1.1]hept-2-yl | H | H | H | | |
| 3.24 | cyclohex-3-en-1-yl | H | H | H | | |
| 3.25 | 4-CHF₂O-Ph | H | H | H | | |
| 3.26 | 3-Me-benzo[b]thiophen-2-yl | H | H | H | | |
| 3.27 | 3-(4-Cl-Ph)-furan-2-yl | H | H | H | | |
| 3.28 | 4- (PhCH₂O)Ph- | H | H | H | | |
| 3.29 | 2-(4-F-PhCH₂S)-1-Me-1*H*-imidazol-5-yl | H | H | H | | |
| 3.30 | benzo[d]imidazo[2,1-b]thiazol-2-yl | H | H | H | | |
| 3.31 | benzofuran-2-yl | H | H | H | | |
| 3.32 | 6-Cl-pyridin-3-yl | H | H | H | | |
| 3.33 | Ph | H | H | H | | |

**Table 4: Compounds of formula (I) wherein A is CH₂CH₂CH₂ and (a) is a formula (IV) as defined above:**

| Cpd | R¹ | R² | R³ | R⁴ | mp °C | Rf |
|---|---|---|---|---|---|---|
| 4.1 | adamantan-1-yl | H | H | H | | |
| 4.2 | CH(OMe)Ph | H | H | H | | |
| 4.3 | 1,4-benzodioxan-2-yl | H | H | H | | |
| 4.4 | CH₂OPh | H | H | H | | |
| 4.5 | -CH(Me)-(4-Me-cyclohex-3-enyl) | H | H | H | | |
| 4.6 | (4S)-4-isopropenyl-cyclohex-1-enyl | H | H | H | | |
| 4.7 | 4-(CH₂OCH=CH2)-cyclohex-1-yl | H | H | H | | |
| 4.8 | oct-2-ynyl | H | H | H | | |
| 4.9 | 4-CF₃-Ph | H | H | H | | |
| 4.10 | 4-(CH₃)₂CH-Ph | H | H | H | | |
| 4.11 | 3-thienyl | H | H | H | | |
| 4.12 | 3-Me-oxetan-3-yl | H | H | H | | |
| 4.13 | CH(CH₃)Ph | H | H | H | | |
| 4.14 | 5-Me-[1,3]dioxan-5-yl | H | H | H | | |
| 4.15 | (1-Me-pyrrolidin-2-yl)-CH₂ | H | H | H | | |
| 4.16 | 3,4-dihydro-2*H*-pyran-2-yl | H | H | H | | |
| 4.17 | D-(4R)-(2,2-DiMe-[1,3]dioxolan-4-yl | H | H | H | | |
| 4.18 | cyclooctyl | H | H | H | | |
| 4.19 | 2-pyridyl-CH₂CH₂ | H | H | H | | |
| 4.20 | (a) | H | H | H | | |
| 4.21 | bicyclo[2.2.1]hept-5-en-2-yl | H | H | H | | |
| 4.22 | 3,5-diMe-isoxazol-4-yl | H | H | H | | |
| 4.23 | 6,6-diMe-bicyclo[3.1.1]hept-2-yl | H | H | H | | |
| 4.24 | cyclohex-3-en-1-yl | H | H | H | | |
| 4.25 | 4-CHF₂O-Ph | H | H | H | | |
| 4.26 | 3-Me-benzo[b]thiophen-2-yl | H | H | H | | |
| 4.27 | 3-(4-Cl-Ph)-furan-2-yl | H | H | H | | . |
| 4.28 | 4- (PhCH₂O)Ph- | H | H | H | | |
| 4.29 | 2-(4-F-PhCH₂S)-1-Me-1*H*-imidazol-5-yl | H | H | H | | |
| 4.30 | benzo[d]imidazo[2,1-b]thiazol-2-yl | H | H | H | | |
| 4.31 | benzofuran-2-yl | H | H | H | | |
| 4.32 | 6-Cl-pyridin-3-yl | H | H | H | | |
| 4.33 | Ph | H | H | H | | |

**Table 5: Compounds of formula (I) wherein A is CHMeCH₂ and (a) is a formula (IV) as defined above:**

| Cpd | R¹ | R² | R³ | R⁴ | mp °C | Rf |
|---|---|---|---|---|---|---|
| 5.1 | adamantan-1-yl | H | H | H | | |
| 5.2 | CH(OMe)Ph | H | H | H | | |
| 5.3 | 1,4-benzodioxan-2-yl | H | H | H | | |
| 5.4 | CH₂OPh | H | H | H | | |
| 5.5 | -CH(Me)-(4-Me-cyclohex-3-enyl) | H | H | H | | |
| 5.6 | (4S)-4-isopropenyl-cyclohex-1-enyl | H | H | H | | |
| 5.7 | 4-(CH₂OCH=CH2)-cyclohex-1-yl | H | H | H | | |
| 5.8 | oct-2-ynyl | H | H | H | | |
| 5.9 | 4-CF₃-Ph | H | H | H | | |
| 5.10 | 4-(CH₃)₂CH-Ph | H | H | H | | |
| 5.11 | 3-thienyl | H | H | H | | |
| 5.12 | 3-Me-oxetan-3-yl | H | H | H | | |
| 5.13 | CH(CH₃)Ph | H | H | H | | |
| 5.14 | 5-Me-[1,3]dioxan-5-yl | H | H | H | | |
| 5.15 | (1-Me-pyrrolidin-2-yl)-CH₂ | H | H | H | | |
| 5.16 | 3,4-dihydro-2*H*-pyran-2-yl | H | H | H | | |
| 5.17 | D-(4R)-(2,2-DiMe-[1,3]dioxolan-4-yl | H | H | H | | |
| 5.18 | cyclooctyl | H | H | H | | |
| 5.19 | 2-pyridyl-CH₂CH₂ | H | H | H | | |
| 5.20 | (a) | H | H | H | | |
| 5.21 | bicyclo[2.2.1]hept-5-en-2-yl | H | H | H | | |
| 5.22 | 3,5-diMe-isoxazol-4-yl | H | H | H | | |
| 5.23 | 6,6-dime-bicyclo[3.1.1]hept-2-yl | H | H | H | | |
| 5.24 | cyclohex-3-en-1-yl | H | H | H | | |
| 5.25 | 4-CHF₂O-Ph | H | H | H | | |
| 5.26 | 3-Me-benzo[b]thiophen-2-yl | H | H | H | | |
| 5.27 | 3-(4-Cl-Ph)-furan-2-yl | H | H | H | | |
| 5.28 | 4- (PhCH₂O)Ph- | H | H | H | | |
| 5.29 | 2-(4-F-PhCH₂S)-1-Me-1*H*-imidazol-5-yl | H | H | H | | |
| 5.30 | benzo[d]imidazo[2,1-b]thiazol-2-yl | H | H | H | | |
| 5.31 | benzofuran-2-yl | H | H | H | | |
| 5.32 | 6-Cl-pyridin-3-yl | H | H | H | | |
| 5.33 | Ph | H | H | H | | |

**Table 6: Compounds of formula (I) wherein A is CH₂CHMe and (a) is a formula (IV) as defined above:**

| Cpd | R¹ | R² | R³ | R⁴ | mp °C | Rf |
|---|---|---|---|---|---|---|
| 6.1 | adamantan-1-yl | H | H | H | | |
| 6.2 | CH(OMe)Ph | H | H | H | | |
| 6.3 | 1,4-benzodioxan-2-yl | H | H | H | | |
| 6.4 | CH₂OPh | H | H | H | | |
| 6.5 | -CH(Me)-(4-Me-cyclohex-3-enyl) | H | H | H | | |
| 6.6 | (4S)-4-isopropenyl-cyclohex-1-enyl | H | H | H | | |
| 6.7 | 4-(CH₂OCH=CH2)-cyclohex-1-yl | H | H | H | | |
| 6.8 | oct-2-ynyl | H | H | H | | |
| 6.9 | 4-CF₃-Ph | H | H | H | | |
| 6.10 | 4-(CH₃)₂CH-Ph | H | H | H | | |
| 6.11 | 3-thienyl | H | H | H | | |
| 6.12 | 3-Me-oxetan-3-yl | H | H | H | | |
| 6.13 | CH(CH₃)Ph | H | H | H | | |
| 6.14 | 5-Me-[1,3]dioxan-5-yl | H | H | H | | |
| 6.15 | (1-Me-pyrrolidin-2-yl)-CH₂ | H | H | H | | |
| 6.16 | 3,4-dihydro-2*H*-pyran-2-yl | H | H | H | | |
| 6.17 | D-(4R)-(2,2-DiMe-[1,3]dioxolan-4-yl | H | H | H | | |
| 6.18 | cyclooctyl | H | H | H | | |
| 6.19 | 2-pyridyl-CH₂CH₂ | H | H | H | | |
| 6.20 | (a) | H | H | H | | |
| 6.21 | bicyclo[2.2.1]hept-5-en-2-yl | H | H | H | | |
| 6.22 | 3,5-diMe-isoxazol-4-yl | H | H | H | | |
| 6.23 | 6,6-diMe-bicyclo[3.1.1]hept-2-yl | H | H | H | | |
| 6.24 | cyclohex-3-en-1-yl | H | H | H | | |
| 6.25 | 4-CHF₂O-Ph | H | H | H | | |
| 6.26 | 3-Me-benzo[b]thiophen-2-yl | H | H | H | | |
| 6.27 | 3-(4-Cl-Ph)-furan-2-yl | H | H | H | | |
| 6.28 | 4- (PhCH₂O)Ph- | H | H | H | | |
| 6.29 | 2-(4-F-PhCH₂S)-1-Me-1*H*-imidazol-5-yl | H | H | H | | |
| 6.30 | benzo[d]imidazo[2,1-b]thiazol-2-yl | H | H | H | | |
| 6.31 | benzofuran-2-yl | H | H | H | | |
| 6.32 | 6-Cl-pyridin-3-yl | H | H | H | | |
| 6.33 | Ph | H | H | H | | |

**Table 7: Compounds of formula (I) wherein A is CH₂CHMeCH₂ and (a) is a formula (IV) as defined above:**

| Cpd | R¹ | R² | R³ | R⁴ | mp °C | Rf |
|---|---|---|---|---|---|---|
| 7.1 | adamantan-1-yl | H | H | H | | |
| 7.2 | CH(OMe)Ph | H | H | H | | |
| 7.3 | 1,4-benzodioxan-2-yl | H | H | H | | |
| 7.4 | CH₂OPh | H | H | H | | |
| 7.5 | -CH(Me)-(4-Me-cyclohex-3-enyl) | H | H | H | | |
| 7.6 | (4S)-4-isopropenyl-cyclohex-1-enyl | H | H | H | | |
| 7.7 | 4-(CH₂OCH=CH2)-cyclohex-1-yl | H | H | H | | |
| 7.8 | oct-2-ynyl | H | H | H | | |
| 7.9 | 4-CF₃-Ph | H | H | H | | |
| 7.10 | 4-(CH₃)₂CH-Ph | H | H | H | | |
| 7.11 | 3-thienyl | H | H | H | | |
| 7.12 | 3-Me-oxetan-3-yl | H | H | H | | |
| 7.13 | CH(CH₃)Ph | H | H | H | | |
| 7.14 | 5-Me-[1,3]dioxan-5-yl | H | H | H | | |
| 7.15 | (1-Me-pyrrolidin-2-yl)-CH₂ | H | H | H | | |
| 7.16 | 3,4-dihydro-2*H*-pyran-2-yl | H | H | H | | |
| 7.17 | D-(4R)-(2,2-DiMe-[1,3]dioxolan-4-yl | H | H | H | | |
| 7.18 | cyclooctyl | H | H | H | | |
| 7.19 | 2-pyridyl-CH₂CH₂ | H | H | H | | |
| 7.20 | (a) | H | H | H | | |
| 7.21 | bicyclo[2.2.1]hept-5-en-2-yl | H | H | H | | |
| 7.22 | 3,5-diMe-isoxazol-4-yl | H | H | H | | |
| 7.23 | 6,6-diMe-bicyclo[3.1.1]hept-2-yl | H | H | H | | |
| 7.24 | cyclohex-3-en-1-yl | H | H | H | | |
| 7.25 | 4-CHF₂O-Ph | H | H | H | | |
| 7.26 | 3-Me-benzo[b]thiophen-2-yl | H | H | H | | |
| 7.27 | 3-(4-Cl-Ph)-furan-2-yl | H | H | H | | |
| 7.28 | 4- (PhCH₂O)Ph- | H | H | H | | |
| 7.29 | 2-(4-F-PhCH₂S)-1-Me-1*H*-imidazol-5-yl | H | H | H | | |
| 7.30 | benzo[d]imidazo[2,1-b]thiazol-2-yl | H | H | H | | |
| 7.31 | benzofuran-2-yl | H | H | H | | |
| 7.32 | 6-Cl-pyridin-3-yl | H | H | H | | |
| 7.33 | Ph | H | H | H | | |

Another aspect of the invention is a method for plant growth regulation which plants are monocotyledoneous or dicotyledoneous crop plants, or parts thereof, preferably selected from the group of economically important field crops such as, for example wheat, barley, rye, triticale, rice, maize, sugar beet, cotton, or soybeans, particularly maize, wheat, and soybean, as well as vegetables and ornamentals, said method comprising applying to said plants, to the seeds from which they grow or to the locus in which they grow, a non-phytotoxic, effective plant growth regulating amount of one or more compounds of formula (I), optionally in mixture with carriers and/or surfactants, and further optionally in mixture with a further active compound selected from the group consisting of acaricides, fungicides, herbicides, insecticides, nematicides or plant growth regulating substances not identical to compounds defined by formula (I).

In case that it is intended to apply the compound having formula (I) either alone or together with a further active compound directly to the seed, there are several ways on how to perform such seed treatment, like by "filmcoating" which is characterized by the creation of a liquid formulation containing an applicable polymer which will be applied to the seed, thereby improving the adherence, the coverage and the distribution of the compounds on the seed.

Among the further active compounds to be applied together with a compound having the formula (I), either applied as one further active compound or applied in a combination of several further active compounds, the following compounds are specifically named as examples of such further active compounds: 2-Phenylphenol; 8-Hydroxyquinoline sulfate; Acibenzolar-S-methyl; Actinovate; Aldimorph; Amidoflumet; Ampropylfos; Ampropylfos-potassium; Andoprim; Anilazine; Azaconazole; Azoxystrobin; Benalaxyl; Benodanil; Benomyl; Benthiavalicarb-isopropyl; Benzamacril; Benzamacril-isobutyl; Bilanafos; Binapacryl; Biphenyl; Bitertanol; Blasticidin-S; Boscalid; Bromuconazole; Bupirimate; Buthiobate; Butylamine; Calcium polysulfide; Capsimycin; Captafol; Captan; Carbendazim; Carboxin; Carpropamid; Carvone; Chinomethionat; Chlobenthiazone; Chlorfenazole; Chloroneb; Chlorothalonil; Chlozolinate; cis-1-(4-chlorophenyl)-2-(1H-1,2,4-triazole-1-yl)-cycloheptanol; Clozylacon; Cyazofamid; Cyflufenamid; Cymoxanil; Cyproconazole; Cyprodinil; Cyprofuram; Dagger G; Debacarb; Dichlofluanid; Dichlone; Dichlorophen; Diclocymet; Diclomezine; Dicloran; Diethofencarb; Difenoconazole; Diflumetorim; Dimethirimol; Dimethomorph; Dimoxystrobin; Diniconazole; Diniconazole-M; Dinocap; Diphenylamine; Dipyrithione; Ditalimfos; Dithianon; Dodine; Drazoxolon; Edifenphos; Epoxiconazole; Ethaboxam; Ethirimol; Etridiazole; Famoxadone; Fenamidone; Fenapanil; Fenarimol; Fenbuconazole; Fenfuram; Fenhexamid; Fenitropan; Fenoxanil; Fenpiclonil; Fenpropidin; Fenpropimorph; Ferbam; Fluazinam; Flubenzimine; Fludioxonil; Flumetover; Flumorph; Fluoromide; Fluoxastrobin; Fluquinconazole; Flurprimidol; Flusilazole; Flusulfamide; Flutolanil; Flutriafol; Folpet; Fosetyl-Al; Fosetyl-sodium; Fuberidazole; Furalaxyl; Furametpyr; Furcarbanil; Furmecyclox; Guazatine; Hexachlorobenzene; Hexaconazole; Hymexazol; Imazalil; Imibenconazole; Iminoctadine triacetate; Iminoctadine tris(albesilate); lodocarb; Ipconazole; Iprobenfos; Iprodione; Iprovalicarb; Irumamycin; Isoprothiolane; Isovaledione; Kasugamycin; Kresoxim-methyl; Mancozeb; Maneb; Meferimzone; Mepanipyrim; Mepronil; Metalaxyl; Metalaxyl-M; Metconazole; Methasulfocarb; Methfuroxam; methyl 1-(2,3-dihydro-2,2-dimethyl-1H-inden-1-yl)-1H-imidazole-5-carboxylate; Methyl 2-[[[cyclopropyl[(4-methoxyphenyl)imino]methyl]thio]methyl]-.alpha.-(methoxymethylene)-benzeneacetate; Methyl 2-[2-[3-(4-chloro-phenylyl-methyl-allylideneaminooxymethyl]-phenyl]-3-methoxy-acrylate; Metiram; Metominostrobin; Metrafenone; Metsulfovax; Mildiomycin; monopotassium carbonate; Myclobutanil; Myclozolin; N-(3-Ethyl-3,5,5-trimethyl-cyclohexyl)-3-formylamino-2-hydroxybenzamide; N-(6-methoxy-3-pyridinyl)-cyclopropanecarboxamide; N-butyl-8-(1,1-dimethylethyl)-1-oxaspiro[4.5]decan-3-amine; Natamycin; Nitrothal-isopropyl; Noviflumuron; Nuarimol; Ofurace; Orysastrobin; Oxadixyl; Oxolinic acid; Oxpoconazole; Oxycarboxin; Oxyfenthiin; Paclobutrazol; Pefurazoate; Penconazole; Pencycuron; Penthiopyrad; Phosdiphen; Phthalide; Picobenzamid; Picoxystrobin; Piperalin; Polyoxins; Polyoxorim; Probenazole; Prochloraz; Procymidone; Propamocarb; Propanosine-sodium; Propiconazole; Propineb; Proquinazid; Prothioconazole; Pyradostrobin; Pyrazophos; Pyrifenox; Pyrimethanil; Pyroquilon; Pyroxyfur; Pyrrolnitrine; Quinconazole; Quinoxyfen; Quintozene; Silthiofam; Simeconazole; Sodium tetrathiocarbonate; Spiroxamine; Sulfur; Tebuconazole; Tecloftalam; Tecnazene; Tetcyclacis; Tetraconazole; Thiabendazole; Thicyofen; Thifluzamide; Thiophanate-methyl; Thiram; Tiadinil; Tioxymid; Tolclofos-methyl; Tolylfluanid; Triadimefon; Triadimenol; Triazbutil; Triazoxide; Tricyclamide; Tricyclazole; Tridemorph; Trifloxystrobin; Triflumizole; Triforine; Triticonazole; Uniconazole; Validamycin A; Vinclozolin; Zineb; Ziram; Zoxamide; (2S)-N-[2-[4-[[3-(4-chlorophenyl)-2-propynyl]oxy]-3-methoxyphenyl]ethyl]-3-methyl- 2-[(methylsulfonyl)amino]-butanamide; 1-(1-naphthalenyl)-1H-pyrrole-2,5-dione; 2,3,5,6-tetrachloro-4-(methylsulfonyl)-pyridine; 2,4-Dihydro-5-methoxy-2-methyl-4-[[[[1-[3-(trifluoromethyl)-phenyl]-ethylidene]-amino]-oxy]-methyl]-phenyl]-3H-1,2,3-triazol-3-one; 2-amino-4-methyl-N-phenyl-5-thiazolecarboxamide; 2-chloro-N-(2,3-dihydro-1,1,3-trimethyl-1H-inden-4-yl)-3-pyridincarboxamide; 3,4,5-trichloro-2,6-pyridinedicarbonitrile; 3-[(3-Bromo-6-fluoro-2-methyl-1H-indol-1-yl)sulfonyl]-N,N-dimethyl-1 H-1,2,4-triazole-1-sulfonamide; Copper salts and Copper preparations, like Bordeaux mixture; Copper hydroxide; Copper naphthenate; Copper oxychloride; Copper sulfate; Cufraneb; Cuprous oxide; Mancopper; Oxine-copper; Alanycarb, Aldicarb, Aldoxycarb, Allyxycarb, Aminocarb, Bendiocarb, Benfuracarb, Bufencarb, Butacarb, Butocarboxim, Butoxycarboxirn, Carbaryl, Carbofuran, Carbosulfan, Cloethocarb, Dimetilan, Ethiofencarb, Fenobucarb, Fenothiocarb, Formetanate, Furathiocarb, Isoprocarb, Metam-sodium, Methiocarb, Methomyl, Metolcarb, Oxamyl, Pirimicarb, Promecarb, Propoxur, Thiodicarb, Thiofanox, Trimethacarb, XMC, Xylylcarb, Acephate, Azamethiphos, Azinphos (-methyl, -ethyl), Bromophos-ethyl, Bromfenvinfos (-methyl), Butathiofos, Cadusafos, Carbophenothion, Chlorethoxyfos, Chlorfenvinphos, Chlormephos, Chlorpyrifos (-methyl/-ethyl), Coumaphos, Cyanofenphos, Cyanophos, Chlorfenvinphos, Demeton-S-methyl, Demeton-S-methylsulphon, Dialifos, Diazinon, Dichlofenthion, Dichlorvos/DDVP, Dicrotophos, Dimethoate, Dimethylvinphos, Dioxabenzofos, Disulfoton, EPN, Ethion, Ethoprophos, Etrimfos, Famphur, Fenamiphos, Fenitrothion, Fensulfothion, Fenthion, Flupyrazofos, Fonofos, Formothion, Fosmethilan, Fosthiazate, Heptenophos, lodofenphos, Iprobenfos, Isazofos, Isofenphos, Isopropyl O-salicylate, Isoxathion, Malathion, Mecarbam, Methacrifos, Methamidophos, Methidathion, Mevinphos, Monocrotophos, Naled, Omethoate, Oxydemeton-methyl, Parathion (-methyl/-ethyl), Phenthoate, Phorate, Phosalone, Phosmet, Phosphamidon, Phosphocarb, Phoxim, Pirimiphos (-methyl/-ethyl), Profenofos, Propaphos, Propetamphos, Prothiofos, Prothoate, Pyradofos, Pyridaphenthion, Pyridathion, Quinalphos, Sebufos, Sulfotep, Sulprofos, Tebupirimfos, Temephos, Terbufos, Tetrachlorvinphos, Thiometon, Triazophos, Triclorfon, Vamidothion, Acrinathrin, Allethrin (d-cis-trans, d-trans), Beta-Cyfluthrin, Bifenthrin, Bioaliethrin, Bioallethrin-S-cyclopentyl-isomer, Bioethanomethrin, Biopermethrin, Bioresmethrin, Chlovaporthrin, Cis-Cypermethrin, Cis-Resmethrin, Cis-Permethrin, Clocythrin, Cycloprothrin, Cyfluthrin, Cyhalothrin, Cypermethrin (alpha-, beta-, theta-, zeta-), Cyphenothrin, Deltamethrin, Empenthrin (1R-isomer), Esfenvalerate, Etofenprox, Fenfluthrin, Fenpropathrin, Fenpyrithrin, Fenvalerate, Flubrocythrinate, Flucythrinate, Flufenprox, Flumethrin, Fluvalinate, Fubfenprox, Gamma-Cyhalothrin, Imiprothrin, Kadethrin, Lambda-Cyhalothrin, Metofluthrin, Permethrin (cis-, trans-), Phenothrin (1 R-trans isomer), Prallethrin, Profluthrin, Protrifenbute, Pyresmethrin, Resmethrin, RU 15525, Silafluofen, Tau-Fluvalinate, Tefluthrin, Terallethrin. Tetramethrin (-1R- isomer), Tralomethrin, Transfluthrin, ZXI 8901, Pyrethrins (pyrethrum), DDT, Indoxacarb, Acetamiprid, Clothianidin, Dinotefuran, Imidacloprid, Nitenpyram, Nithiazine, Thiacloprid, Thiamethoxam, Nicotine, Bensultap, Cartap, Camphechlor, Chlordane, Endosulfan, Gamma-HCH, HCH, Heptachlor, Lindane, Methoxychlor Spinosad, Acetoprole, Ethiprole, Fipronil, Vaniliprole, Avermectin, Emamectin, Emamectinbenzoate, Ivermectin, Milbemycin, Diofenolan, Epofenonane, Fenoxycarb, Hydroprene, Kinoprene, Methoprene, Pyriproxifen, Triprene, Chromafenozide, Halofenozide, Methoxyfenozide, Tebufenozide, Bistrifluron, Chlofluazuron, Diflubenzuron, Fluazuron, Flucycloxuron, Flufenoxuron, Hexaflumuron, Lufenuron, Novaluron, Noviflumuron, Penfluron, Teflubenzuron, Triflumuron, Buprofezin, Cyromazine, Diafenthiuron, Azocyclotin, Cyhexatin, Fenbutatin-oxide, Chlorfenapyr, Binapacyrl, Dinobuton, Dinocap, DNOC, Fenazaquin, Fenpyroximate, Pyrimidifen, Pyridaben, Tebufenpyrad, Tolfenpyrad, Hydramethylnon, Dicofol, Rotenone, Acequinocyl, Fluacrypyrim; Bacillus thuringiensis strains, Spirodiclofen, Spiromesifen, 3-(2,5-Dimethylphenyl)-8-methoxy-2-oxo-1-azaspiro[4.5]dec-3-en-4-yl ethyl carbonate (alias: Carbonic acid, 3-(2,5-dimethylphenyl)-8-methoxy-2-oxo-1-azaspiro[4.5]dec-3-en-4-yl ethyl ester, CAS-Reg.-No.: 382608-10-8) and Carbonic acid, cis-3-(2,5-dimethylphenyl)-8-methoxy-2-oxo-1-azaspiro[4.5]dec-3-en-4-yl ethyl ester (CAS-Reg.-No.: 203313-25-1), Flonicamid, Amitraz, Propargite, N2-[1,1-Dimethyl-2-(methylsulfonyl)ethyl]-3-iodo-N1-[2-methyl-4-[1,2,2,2-tetrafluoro-1-(trifluoromethyl)ethyl]phenyl]-1,2-benzenedicarboxamide (CAS-Reg.-No.: 272451-65-7), Thiocyclam hydrogen oxalate, Thiosultap-sodium, Azadirachtin, Bacillus spec., Beauveria spec., Codlemone, Metarrhizium spec., Paecilomyces spec., Thuringiensin, Verticillium spec., Aluminium phosphide, Methyl bromide, Sulfuryl fluoride, Cryolite, Flonicamid, Pymetrozine, Clofentezine, Etoxazole, Hexythiazox, Amidoflumet, Benclothiaz, Benzoxirnate, Bifenazate, Bromopropylate, Buprofezin, Chinomethionat, Chlordimeform, Chlorobenzilate, Chloropicrin, Clothiazoben, Cycloprene, Dicyclanil, Fenoxacrim, Fentrifanil, Flubenzimine, Flufenerim, Flutenzin, Gossyplure, Hydramethylnone, Japonilure, Metoxadiazone, Petroleum, Piperonyl butoxide, Potassium oleate, Pyridalyl, Sulfluramid, Tetradifon, Tetrasul, Triarathene, Verbutin.

Another aspect of the invention is a method for growth regulation in plant tissue cultures of monocotyledoneous or dicotyledoneous plants said method comprising applying to plant tissue cultures an appropriate amount of a compound having the formula (I) either alone or together with at least one further active compound selected from the group of plant growth regulators or plant hormones.

The compounds of formula (I) can preferably be employed as plant growth regulators in crops of useful monocotyledoneous or dicotyledoneous crop plants, preferably selected from the group of economically important field crops such as, for example wheat, barley, rye, triticale, rice, maize, sugar beet, cotton, or soybeans, particularly maize, wheat, and soybeann, as well as vegetables and ornamentals, that have been rendered thus by means of genetic engineering.

Traditional ways of generating novel plants which have modified characteristics in comparison with existing plants consist, for example, in traditional breeding methods and the generation of mutants. However, it is also possible to generate novel plants with altered characteristics with the aid of genetic engineering methods (see, for example, EP-A-0221044, EP-A-0131624). For example, several cases have been described of
- genetic engineering modifications of crop plants with the purpose of modifying the starch synthesized in the plants (for example WO 92/11376, WO 92/14827, WO 91/19806).
- transgenic crop plants which are resistant to certain herbicides of the glufosinate type (cf., for example, EP-A-0242236, EP-A-242246) or the glyphosate type (WO 92/00377) or the sulfonylurea type (EP-A-0257993, US-A-5013659),
- transgenic crop plants, for example cotton, which are capable of producing Bacillus thuringiensis toxins (Bt toxins) which make the plants resistant to specific pests (EP-A-0142924, EP-A-0193259),
- transgenic crop plants whose fatty acid spectrum is modified (WO 91/13972).

A large number of techniques in molecular biology by means of which novel transgenic plants with altered characteristics can be generated are known in principle; see, for example, Sambrook et al., 1989, Molecular Cloning, A Laboratory Manual, 2nd Ed., Cold Spring Harbor Laboratory Press, Cold Spring Harbor, NY; or Winnacker "Gene und Klone" [Genes and Clones], VCH Weinheim 2nd Edition 1996, or Christou, "Trends in Plant Science" 1 (1996) 423-431).

In order to perform such genetic engineering manipulations, nucleic acid molecules may be introduced into plasmids which allow mutagenesis or a sequence change by means of recombination of DNA sequences. It is possible, for example, with the aid of the abovementioned standard methods to perform base exchanges, to remove subsequences or to add natural or synthetic sequences. To connect the DNA fragments to each other, adaptors or linkers may be attached to the fragments.

For example, plant cells with a reduced activity of a gene product can be generated by expressing at least one corresponding antisense RNA, a sense RNA to achieve a cosuppressory effect or by expressing at least one ribozyme of suitable construction which specifically cleaves transcripts of the abovementioned gene product.

To this end it is possible to make use of, on the one hand, DNA molecules which encompass the entire coding sequence of a gene product inclusive of any flanking sequences which may be present, on the other hand DNA molecules which only encompass parts of the coding sequence, but these parts must be long enough in order to effect, in the cells, an antisense effect. Use may also be made of DNA sequences which show a high degree of homology to the coding sequences of a gene product, but which are not completely identical.

When nucleic acid molecules are expressed in plants, the protein which has been synthesized may be located in any desired compartment of the plant cell. However, to achieve localization in a particular compartment, it is possible, for example, to link the coding region with DNA sequences which guarantee localization in a particular compartment. Such sequences are known to the skilled worker (see, for example, Braun et al., EMBO J. 11 (1992), 3219-3227; Wolter et al., Proc. Natl. Acad. Sci. USA 85 (1988). 846-850; Sonnewald et al., Plant J. 1 (1991), 95-106).

The transgenic plant cells may be regenerated by known techniques to give complete plants. In principle, the transgenic plants can be plants of any desired plant species, that is to say monocotyledonous and also dicotyledonous plants.

This allows transgenic plants to be obtained which exhibit altered characteristics by means of overexpression, suppression or inhibition of homologous (= natural) genes or gene sequences or by means of expression of heterologous (= foreign) genes or gene sequences.

The compounds of formula (I) can preferably be employed in transgenic crops which are resistant to herbicides from the group of the sulfonylureas, glufosinate-ammonium or glyphosate-isopropylammonium and analogous active substances or in analogous showing altered phenotypes, like but not limited to features as for content modification, altered flowering time, male or female sterile plants, environmentally resistant plants due to expression or repression of endogenous or exogeneous genes in the transgenic crop.

The use according to the invention for plant growth regulation also includes the case where the compounds of formula (I) are only formed in the plant or the soil from a precursor ("prodrug") after its application to the plant.

The compounds of formula (I) can be employed in the conventional preparations as wettable powders, emulsifiable concentrates, sprayable solutions, dusts or granules. The invention therefore also relates to plant growth regulating compositions which comprise compounds of formula (I).

There is provided a plant growth regulating composition comprising an effective amount of a compound of formula (I) as defined above or an agriculturally acceptable salt thereof, in association with, and preferably homogeneously dispersed in, one or more compatible agriculturally- acceptable diluents or carriers and/or surface active agents [i.e. diluents or carriers and/or surface active agents of the type generally accepted in the art as being suitable for use in herbicidal compositions and which are compatible with compounds of the invention]. The term "homogeneously dispersed" is used to include compositions in which the compounds of formula (I) are dissolved in other components. The term "growth regulating composition" is used in a broad sense to include not only compositions which are ready for use as herbicides but also concentrates which must be diluted before use (including tank mixtures).

The compounds of formula (I) can be formulated in various ways, depending on the prevailing biological and/or chemico-physical parameters. Examples of possible formulations which are suitable are: wettable powders (WP), water-soluble powders (SP), water-soluble concentrates, emulsifiable concentrates (EC), emulsions (EW) such as oil-in-water and water-in-oil emulsions, sprayable solutions, suspension concentrates (SC), dispersions on an oil or water basis, solutions which are miscible with oil, capsule suspensions (CS), dusts (DP), seed-dressing products, granules for broadcasting and soil application, granules (GR) in the form of microgranules, spray granules, coated granules and adsorption granules, water-dispersible granules (WG), water-soluble granules (SG), ULV formulations, microcapsules and waxes.

These individual formulation types are known in principle and described, for example, in: Winnacker-Küchrer, "Chemische Technologie" [Chemical Technology], Volume 7, C. Hauser Verlag, Munich, 4th Edition 1986; Wade van Valkenburg, "Pesticide Formulations", Marcel Dekker, N.Y., 1973; K. Martens, "Spray Drying Handbook", 3rd Ed. 1979, G. Goodwin Ltd. London.

The necessary formulation auxiliaries such as inert materials, surfactants, solvents and other additives are also known and described, for example, in: Watkins, "Handbook of Insecticide Dust Diluents and Carriers", 2nd Ed., Darland Books, Caldwell N.J.; H.v. Olphen, "Introduction to Clay Colloid Chemistry", 2nd Ed., J. Wiley & Sons, N.Y.; C. Marsden, "Solvents Guide", 2nd Ed., Interscience, N.Y. 1963; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Athylenoxidaddukte" [Surface-active ethylene oxide adducts], Wiss. Verlagsgesell., Stuttgart 1976; Winnacker-Küchler, "Chemische Technologie" [Chemical Technology], Volume 7, C. Hauser Verlag, Munich, 4th Ed. 1986.

Based on these formulations, it is also possible to prepare combinations with pesticidally active substances such as, for example, insecticides, acaricides, herbicides, fungicides, and with safeners, fertilizers and/or growth regulators, for example in the form of a readymix or a tank mix.

Wettable powders are preparations which are uniformly dispersible in water and which, besides the compounds of formula (I), also comprise ionic and/or nonionic surfactants (wetters, dispersants), for example, polyoxyethylated alkylphenols, polyoxyethylated fatty alcohols, polyoxyethylated fatty amines, fatty alcohol polyglycol ether sulfates, alkanesulfonates or alkylbenzenesulfonates, sodium lignosulfonate, sodium 2,2'-dinaphthylmethane-6,6'-disuifonate, sodium dibutylnaphthalenesulfonate or else sodium oleoylmethyltaurinate, in addition to a diluent or inert substance. To prepare the wettable powders, the compounds of formula (I) are, for example, ground finely in conventional apparatuses such as hammer mills, blower mills and air-jet mills and mixed with the formulation auxiliaries, either concomitantly or thereafter.

Emulsifiable concentrates are prepared, for example, by dissolving the compounds of formula (I) in an organic solvent, for example butanol, cyclohexanone, dimethylformamide, xylene or else higher-boiling aromatics or hydrocarbons or mixtures of these, with addition of one or more ionic and/or nonionic surfactants (emulsifiers). Emulsifiers which can be used are, for example: calcium salts of alkylarylsulfonic acids, such as calcium dodecylbenzenesulfonate or nonionic emulsifiers, such as fatty acid polyglycol esters, alkylaryl polyglycol ethers, fatty alcohol polyglycol ethers, propylene oxide/ethylene oxide condensates, alkyl polyethers, sorbitan esters such as sorbitan fatty acid esters or polyoxyethylene sorbitan esters such as polyoxyethylene sorbitan fatty acid esters.

Dusts are obtained by grinding the active substance with finely divided solid substances, for example talc or natural clays, such as kaolin, bentonite or pyrophyllite, or diatomaceous earth.

Suspension concentrates may be water- or oil-based. They can be prepared, for example, by wet grinding by means of commercially available bead mills, if appropriate with addition of surfactants, as they have already been mentioned above for example in the case of the other formulation types.

Emulsions, for example oil-in-water emulsions (EW), can be prepared for example by means of stirrers, colloid mills and/or static mixtures using aqueous organic solvents and, if appropriate, surfactants as they have already been mentioned above for example in the case of the other formulation types.

Granules can be prepared either by spraying the compounds of formula (I) onto adsorptive, granulated inert material or by applying active substance concentrates onto the surface of carriers such as sand, kaolinites or of granulated inert material, by means of binders, for example polyvinyl alcohol, sodium polyacrylate or alternatively mineral oils. Suitable active substances can also be granulated in the manner which is conventional for the production of fertilizer granules, if desired in a mixture with fertilizers.

Water-dispersible granules are prepared, as a rule, by the customary processes such as spray-drying, fluidized-bed granulation, disk granulation, mixing in highspeed mixers and extrusion without solid inert material. To prepare disk, fluidized-bed, extruder and spray granules, see, for example, processes in "Spray-Drying Handbook" 3rd ed. 1979, G. Goodwin Ltd., London; J.E. Browning, "Agglomeration", Chemical and Engineering 1967, pages 147 et seq.; "Perry's Chemical Engineer's Handbook", 5th Ed., McGraw-Hill, New York 1973, p. 8-57.

For further details on the formulation of crop protection products, see, for example, G.C. Klingman, "Weed Control as a Science", John Wiley and Sons, Inc., New York, 1961, pages 81-96 and J.D. Freyer, S.A. Evans, "Weed Control Handbook", 5th Ed., Blackwell Scientific Publications, Oxford, 1968, pages 101-103.

As a rule, the agrochemical preparations comprise 0.1 to 99% by weight, in particular 0.1 to 95% by weight, of compounds of formula (I).

The concentration of compounds of formula (I) in wettable powders is, for example, approximately 10 to 90% by weight, the remainder to 100% by weight being composed of customary formulation components. In the case of emulsifiable concentrates, the concentration of compounds of formula (I) can amount to approximately 1 to 90, preferably 5 to 80% by weight. Formulations in the form of dusts usually comprise 1 to 30% by weight of compounds of formula (I), preferably in most cases 5 to 20% by weight of compounds of formula (I), while sprayable solutions comprise approximately 0.05 to 80, preferably 2 to 50% by weight of compounds of formula (I). In the case of water-dispersible granules, the content of compounds of formula (I) depends partly on whether the compounds of formula (I) are in liquid or solid form and on which granulation auxiliaries, fillers and the like are being used. The water-dispersible granules, for example, comprise between 1 and 95% by weight of active substance, preferably between 10 and 80% by weight.

In addition, the formulations of compounds of formula (I) mentioned comprise, if appropriate, the adhesives, wetters, dispersants, emulsifiers, penetrants, preservatives, antifreeze agents, solvents, fillers, carriers, colorants, antifoams, evaporation inhibitors, pH regulators and viscosity regulators which are conventional in each case.

Suitable formulations for plant growth regulating compositions are known. A description of suitable formulations which may be used in the method of the invention can be found in international patent publications WO 87/3781, WO 93/6089, and WO 94/21606 as well as in European patent application EP 295117, and US Patent 5,232,940. Formulations or compositions for plant growth regulating uses can be made in a similar way, adapting the ingredients, if necessary, to make them more suitable to the plant or soil to which the application is to be made.

The compounds of the formula (I) or their salts can be employed as such or in the form of their preparations (formulations) as combinations with other pesticidally active substances, such as, for example, insecticides, acaricides, nematicides, herbicides, fungicides, safeners, fertilizers and/or further growth regulators, for example as a premix or as tank mixes.

It has been found that, surprisingly, the compounds of formula (I) and most especially compounds 1.1, 1.23, 1.27, and 1.32 display a significant role concerning plant growth properties, which can be different due to an application at various crops.

By virtue of the practice of the present invention a wide variety of plant growth responses, including the following (non-ranked listing), may be induced:
a) more developed root system
b) tillering increase
c) increase in plant height
d) bigger leaf blade
e) less dead basal leaves
f) stronger tillers
g) greener leaf color
h) less fertilizers needed
i) less seeds needed
j) more productive tillers
k) less third non-productive tillers
l) earlier flowering
m) early grain maturity
n) less plant verse (lodging)
o) longer panicles
p) increased shoot growth
q) improved plant vigour
r) early germination
s) more fruit and better yield

It is intended that as used in the instant specification the term "method for plant growth regulation" or "plant growth regulation" means the achievement of any of the aforementioned nineteen categories of response or any other modification of plant, seed, fruit or vegetable (whether the fruit or vegetable is not harvested or harvested) so long as the net result is to increase growth or benefit any property of the plant, seed, fruit or vegetable as distinguished from any pesticidal action (unless the present invention is practised in conjunction with or in the presence of a pesticide, for example a herbicide). The term "fruit" as used in the instant specification is to be understood as meaning anything of economic value that is produced by the plant.

Preferably, at least an increase of 10% of one or more of the respective plant growth response is obtained.

The 2-amino-6-oxypurine derivatives derivatives of formula (I) may be applied for plant growth regulating purposes to the foliage of plants and/or to the soil in which said plants are growing. Applications to the soil are often in the form of granules which are usually applied in sufficient amount to provide a rate of from about 0.001 kg/ha to about 0.5 kg/ha of active ingredient, preferably between 0.01 and 0.1 kg/ha.

A preferred embodiment of the invention is a method for plant growth regulation comprising applying to the seeds from which said plants grow, prior to said seeds, a non-phytotoxic, effective plant growth regulating amount of a compound having the formula (I). The seed may be treated, especially by coating or embedding or impregnation or soaking or dipping in liquid or paste formulations which are known per se and are subsequently dried. Seed comprising 2 to 1000 gram of a compound of formula (I) per 100 kg, preferably 5 to 800 g per 100 kg, most preferably 5 to 250 g per 100 kg are particularly appropriate for this purpose.

The precise amount of 2-amino-6-oxypurine derivatives derivatives compound to be used will depend, *inter alia*, upon the particular plant species being treated. A suitable dose may be determined by the man skilled in the art by routine experimentation. The plant response will depend upon the total amount of compound used, as well as the particular plant species which is being treated. Of course, the amount of 2-amino-6-oxypurine derivatives derivatives should be non-phytotoxic with respect to the plant being treated.

Although the preferred method of application of the compounds used in the process of this invention is directly to the foliage and stems of plants, the compounds can be applied to the soil in which the plants are growing.

The following examples are illustrative of methods of plant growth regulation according to the invention, but should not be understood as limiting the invention as modifications in materials and methods will be apparent to the skilled worker. All measurements of plant growth regulating effects were determined either by using a protoplast screening assay and/or by using a root growth assay and/or by applying the compounds pre-selected by using the before defined assay system under natural growth conditions in field trials. In all cases, untreated protoplasts, plants or plants parts, or seeds were taken as a control.

### B. Biological Examples

### Example 1. Plant Protoplast System

The present invention features a so called high throughput assay for a rapid screening of chemical compounds that modulate cell growth. The assay in general involves: a) plant protoplasts grown in liquid medium, b) a library of chemical compounds, and c) screening the protoplasts to identify the compounds which affect significantly the cell growth and development.

### Protoplast preparation:

Preferably the protoplasts were prepared from cell suspensions derived from maize callus. The protoplasts were obtained by enzymatic digestion of the cell aggregates in the suspension. The cells were digested for 3-6 hours at room temperature in a cellulase-pectolyase mix, Protoplasts were released by gentle shaking, filtered through a 45 µm mesh and collected by centrifugation. After digestion, the protoplasts were washed several times to remove cell debris and enzyme residues and then re-suspended in culture medium. The protoplasts were plated in 50 - 100 µl aliquots in microtiter wells at a density ranging from 100.000 - 2.000.000 protoplasts per ml, preferably at a concentration of 800.000 protoplasts/ml.

### Screening assay:

To identify chemical compounds that modulate the cell growth, maize protoplasts were incubated with a library of chemical compounds in 96-well microtiter plates. Following the incubation at 25°C for 1-14 days, preferably 7-10 days, the protein content was measured by Coomassie dye based colorimetric assays. The growth of the cells treated with the chemical compounds involved in the test was detected by comparison with untreated protoplasts.

Treatment with a section of compounds derived from formula (I) show an increase of more than 50% over untreated control.

### Example 2. Root growth assay

Plant roots are a highly proliferative tissue that allows an easy accessible, cheap and short term screening method for plant growth regulators. The results obtained can easily be transferred to the overall effects on a plant of plant growth regulators identified by such a system. By using this root assay one is enabled to determine the effect of a seed treatment to root growth and/ or germination and/ or changes in habitat of germinated plants in order to identify the possible use as a yield enhancer. Two seeds of wheat (*Triticum aestivum*, variety "TRISO") or 1 seed of maize (Zea *mays*, variety "LORENZO") per hole in a plastic tray which contains an architecture of 8 x 13 holes were placed on compost soil covered with sand. These seeds were treated with 100 µl/ hole, which creates an application volume of approx. 1200 I/ ha, of a compound solution at active ingredient rates equivalent to 100, 10 and 1 g a.i./ ha of each compound using an robotic application system (Lizzy Spray Robotics). Six replicates in a row of each compound and concentration were done. The outer rim of the above defined plastic tray was untreated to avoid false negative effects and the middle row (No. 7) was used as untreated control. The treated seeds were allowed to dry for approx. 4 hours and subsequently covered with sand and watered. The trays were stored in climate chambers with 14 hours lighting at a temperature of 24° C (± 2) at daytime and 16° C (± 2) at night and relative humidity (rH) of 60% and daily watered. Assessments were done 16 (± 2) days post treatment by counting the germinated plants and assessing the phytotoxicity symptoms and percentage. In addition, the roots were washed out and the shoots were cut directly above the seed and the wet roots were placed on dry paper towels for approximately 30 minutes and weighted afterwards. This procedure provides a similar grade of moisture to the roots so that a comparison of the weights is possible.

Table 8 shows the results of some of the compounds (Cpd) claimed to be effective in plant growth regulation concerning maize. The effects observed concerning Root Growth given in column 2 (Root Growth of "100" is set as the standard) are directed to concentrations that are equivalent to 100, 10, 1 g a.i./ha, each.

**Table 8**

| Cpd | Maize | | |
|---|---|---|---|
| | (concentration g a.i./ha) | | |
| | 100 | 10 | 1 |
| 1.32 | 113 | 141 | 106 |

Table 9 shows the results of some of the compounds (Cpd) claimed to be effective in plant growth regulation concerning wheat. The effects observed concerning Root Growth given in column 2 (Root Growth of "100" is set as the standard) are directed to concentrations that are equivalent to 100, 10, 1 g a.i./ha, each.

**Table 9**

| Cpd | Wheat | | |
|---|---|---|---|
| | (concentration g a.i./ha) | | |
| | 100 | 10 | 1 |
| 1.1 | 141 | 76 | 84 |
| 1.23 | 195 | 226 | 188 |
| 1.27 | 221 | 192 | 220 |

### Example 3. Glasshouse trials

Seed treatments containing the chemicals were applied to wheat seed as a seed treatment at rates of 0, 1, 10 and 100 mg of compound (Cpd) per kg of seed using a randomized complete block design with 3 replications.

The seed treatments were prepared by dissolving the chemicals in DMSO at a concentration of 1 mg/ml, making the appropriate dilutions, and mixing chemical solutions with an equal volume of the seed coating solution Raxil-MD (Gustafson).

The seed treatments containing the chemicals were applied to seed by combining 25 g of wheat seed (Dirkwin var.) with 140 µl of the seed treatment in a sealed bag and thoroughly mixing them until the seed are evenly coated.

The treated seeds were planted in trays containing 25 pots (7.3 cm x 7.3 cm x 22.9 cm tall) filled with Pro-Mix HP mixed with Osmocoat fertilizer (680 g of Osmocote (15-9-12) per 32 kg Pro Mix 15-9-12) allowed to germinate and thinned to a single plant per pot. Plants were grown in the Glasshouse maintained at 20° C during the day and 16°C at night. Light was supplemented with 75 µEi of light from high pressure sodium bulbs to provide a 16 h day and 8 h night. When the plants matured, seed was harvested and cleaned from all the plants in a tray. The mass of the seeds was measured and recorded in Gram seed yield / Tray. Table 10 shows the results obtained by using compound 1.32 at various application rates.

**Table 10**

| Treatment (mg Cpd 1.32/ kg seed) | Seed yield g/ Tray |
|---|---|
| 0 | 31.3 |
| 1 | 48.6 |
| 10 | 58.1 |
| 100 | 42.3 |

## Claims

1. Use of a compound of formula (I) or an agriculturally acceptable salt thereof for plant growth regulation 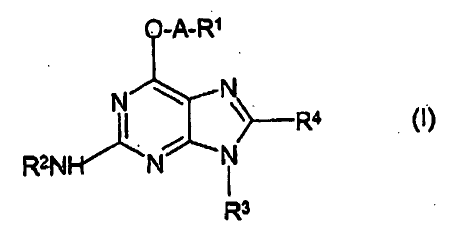 wherein:
A is (C₁-C₆)-alkylene or (C₁-C₆)-haloalkylene, in which groups a methylene moiety may be replaced by a group selected from -C(=O)-, -O- and -S-, with the proviso that the replacing group is not bonded to the adjacent O atom; or is (C₂-C₆)-alkenylene, (C₂-C₆)-haloalkenylene, (C₃-C₆)-alkynylene or (C₃-C₆)-haloalkynylene;
R¹ is H, (C₃-C₁₀)cycloalkyl or (C₅-C₁₀)cycloalkenyl, where each of the last 2 mentioned radicals is unsubstituted or substituted by one or more R⁵ radicals;
or Is (C₅-C₁₀)aryl or (3-10)heterocyclyl, where each of the last 2 mentioned radicals is unsubstituted or substituted by one or more R⁶ radicals;
R² is H, (C₁-C₃)alkyl or (C₁-C₃)haloalkyl;
R³ is H, CO-(C₁-C₃)alkyl, CO-(C₁-C₃)haloalkyl, CO₂-(C₁-C₃)alkyl, CONR²R^{2a} or COS-(C₁-C₃)alkyl;
R⁴ is H, halogen, (C₁-C₃)alkyl or (C₁-C₃)haloalkyl;
R⁵ is (C₁-C₆)alkyl. (C₁-C₆)haloalkyl, halogen, (C₁-C₆)alkoxy, (C₁-C₆)haloalkoxy, (C₁-C₆)alkylthio or (C₁-C₆)haloalkylthio;
R⁶ is (C₁-C₆)alkyl, (C₁-C₆)haloalkyl. (C₂-C₆)alkenyl, (C₂-C₆)haloalkenyl, (C₂-C₆)alkynyl, (C₂-C₆)haloalkynyl, halogen, (C₁-C₆)alkoxy, (C₁-C₆)haloalkoxy, (C₂-C₆)alkenyloxy, (C₂-C₆)haloalkenyloxy, (C₂-C₆)alkynyloxy, (C₂-C₆)haloalkynyloxy, S(O)ₘR⁷, CN, NO₂, OH, -(CH₂)ₙR⁸, COR⁹, NR¹⁰COR⁹, NR⁹SO₂R⁷, CONR⁹R¹⁰, NR⁹R¹⁰, S(O)ₚR⁸, OR⁸ or CO₂R⁷ , or two adjacent OH groups may together with two adjacent carbon atoms of the heterocyclyl group form a 2-R¹¹, 2-R¹²-1,3-dioxolan-yl ring, or when R¹ is (3-10)heterocyclyl may also be oxo;
R⁷ is (C₁-C₆)alkyl or (C₁-C₆)haloalkyl;
R⁸ is phenyl unsubstituted or substituted by one or more radicals selected from the group consisting of (C₁-C₆)alkyl, (C₁-C₆)haloalkyl, halogen, (C₁-C₆)alkoxy, (C₁-C₆)haloalkoxy, S(O)ₘR⁷, CN and NO₂;
R⁹ and R¹⁰ are each independently H, (C₁-C₆)alkyl or (C₁-C₆)haloalkyl;
R¹¹ is H, (C₁-C₆)alkyl or phenyl;
R¹² is H or (C₁-C₆)alkyl; and
m, n and p are each independently 0, 1 or 2.

2. The use of a compound as defined in claim 1, in which
A is (C₁-C₃)-alkylene, (C₁-C₃)-haloalkylene or (C₂-C₃)-alkenylene

3. The use of a compound as defined in claim 1, in which
R¹ is (C₃-C₁₀)cycloalkyl or (C₅-C₁₀)cycloalkenyl, which radicals are unsubstituted or substituted by one or more radicals selected from (C₁-C₆)alkyl, (C₁-C₆)haloalkyl, halogen, (C₁-C₆)alkoxy, (C₁-C₆)haloalkoxy, (C₁-C₆)alkylthio and (C₁-C₆)haloalkylthio ;
or is (C₅-C₁₀)aryl or (C₅-C₁₀)heterocyclyl, where each of the last 2 mentioned radicals is unsubstituted or substituted by one or more radicals selected from (C₁-C₆)alkyl, (C₁-C₆)haloalkyl, (C₂-C₆)alkenyl, (C₂-C₆)haloalkenyl, (C₂-C₆)alkynyl, (C₂-C₆)haloalkynyl, halogen, (C₁-C₆)alkoxy, (C₁-C₆)haloalkoxy. (C₂-C₆)alkenyloxy, (C₂-C₆)haloalkenyloxy, (C₂-C₆)alkynyloxy, (C₂-C₆)haloalkynyloxy, S(O)ₘR⁷,-(CH₂)ₙR⁸, S(O)ₚR⁸ and OR⁸, or two adjacent OH groups may together with two adjacent carbon atoms of the heterocyclyl group form a 2-R¹¹, 2-R¹²-1,3-dioxolan-yl ring, or when R¹ is (C₅-C₁₀)heterocyclyl may also be oxo.

4. The use of a compound as defined in claim 1, in which
R¹ is cyclopentyl, cyclohexyl, cyclopentenyl or cyclohexenyl, which rings are optionally fused to a second cyclopentyl, cyclohexyl, cyclopentenyl or cyclohexenyl ring, which ring may be the same or different, and which rings are unsubstituted or substituted by one or more radicals selected from the group consisting of (C₁-C₆)alkyl, (C₁-C₆)haloalkyl, halogen, (C₁-C₆)alkoxy, (C₁-C₆)haloalkoxy, (C₁-C₆)alkylthio and (C₁-C₆)haloalkylthio;
or is cycloheptanyl, cyclooctanyl, cycloheptenyl, cyclooctenyl, bicyclo[2.2.1]heptenyl or bicyclo[2.2.1]heptanyl where each of the last 6 mentioned rings is unsubstituted or substituted by one or more (C₁-C₆)alkyl radicals;
or is phenyl, naphthyl, pyridyl, thienyl, benzthienyl, furyl, isoxazolyl or imidazolyl where each of the last 8 mentioned radicals is unsubstituted or substituted by one or more radicals selected from the group consisting of (C₁-C₆)alkyl, (C₁-C₆)haloalkyl, (C₂-C₆)alkenyl, (C₂-C₆)haloalkenyl, (C₂-C₆)alkynyl, (C₂-C₆)haloalkynyl, halogen, (C₁-C₆)alkoxy and S(O)ₘR⁷;
or is dihydropyranyl, tetrahydropyranyl, tetrahydrofuryl, 1,3-dioxolanyl, 1,4-benzodioxanyl, pyrrolidinyl or oxetanyl where each of the last 7 mentioned rings is unsubstituted or substituted by one or more radicals selected from the group consisting of (C₁-C₆)alkyl, (C₁-C₆)haloalkyl, (C₂-C₆)alkenyl, halogen, (C₁-C₆)alkoxy, (C₂-C₆)alkenyloxy, S(O)ₘR⁷ and -(CH₂)ₙR⁸;
or is tetrahydropyranyl fused to a 2-R¹¹, 2-R¹²-1,3-dioxolan-yl ring;
or is adamantyl.

5. The use of a compound as defined in claim 1, in which
R¹ is cyclopentyl, cyclohexyl, cyclopentenyl or cyclohexenyl which rings are unsubstituted or substituted by one or more radicals selected from the group consisting of (C₁-C₆)alkyl, (C₁-C₆)haloalkyl, halogen, (C₁-C₆)alkoxy, (C₁-C₆)haloalkoxy, (C₁-C₆)alkylthio and (C₁-C₆)haloalkylthio;
or is cyclooctanyl, bicyclo[2.2.1]heptenyl or bicyclo[2.2.1]heptanyl where each of the last 3 mentioned rings is unsubstituted or substituted by one or more (C₁-C₆)alkyl radicals;
or is phenyl, naphthyl, pyridyl, thienyl, benzthienyl, furyl, isoxazolyl or imidazolyl, where each of the last 8 mentioned rings is unsubstituted or substituted by one or more radicals selected from the group consisting of (C₁-C₆)alkyl, (C₁-C₆)haloalkyl, (C₂-C₆)alkenyl, halogen, (C₁-C₆)alkoxy, (C₂-C₆)alkenyloxy, S(O)ₘR⁷ and -(CH₂)ₙR⁸;
or is dihydropyranyl, tetrahydropyranyl, tetrahydrofuryl, 1,3-dioxolanyl, 1,4-benzodioxanyl, pyrrolidinyl or oxetanyl where each of the last 7 mentioned rings is unsubstituted or substituted by one or more radicals selected from the group consisting of (C₁-C₆)alkyl, (C₁-C₆)haloalkyl, (C₂-C₆)alkenyl, halogen and (C₁-C₆)alkoxy;
or is tetrahydropyranyl fused to a 1,3-dioxolan-yl ring;
or is adamantyl.

6. The use of a compound as defined in claim 1, in which
R¹ is cyclopentyl, cyclohexyl, cyclopentenyl, cyclohexenyl, phenyl, naphthyl, pyridyl, thienyl, benzthienyl, furyl, isoxazolyl or imidazolyl, tetrahydropyranyl, tetrahydrofuryl, dihydropyranyl, tetrahydropyranyl, tetrahydrofuryl, 1,3-dioxolanyl, 1,4-benzodioxanyl, pyrrolidinyl or oxetanyl where each of the last 12 mentioned radicals, is unsubstituted or substituted by one or more radicals selected from the group consisting of (C₁-C₃)alkyl, (C₁-C₃)haloalkyl, halogen and (C₁-C₃)alkoxy;
or is cyclooctanyl, bicyclo[2.2.1]heptenyl, bicyclo[2.2.1]heptanyl, dihydropyranyl, tetrahydropyranyl, tetrahydrofuryl, 1,3-dioxolanyl, 1,4-benzodioxanyl, pyrrolidinyl or oxetanyl where each of the last 10 mentioned rings is unsubstituted or substituted by one or more (C₁-C₆)alkyl radicals;
or is tetrahydropyranyl fused to a 1,3-dioxolan-yl ring;
or is adamantyl.

7. The use of a compound as defined in anyone of claims 1-6, in which R² is H.

8. The use of a compound as defined in anyone of claims 1-7, in which R³ is H, COCH₃, COCF₃ or CO₂CH₃.

9. The use of a compound as defined in anyone of claims 1-8, in which R⁴ is H, methyl or trifluoromethyl.

10. The use of a compound as defined in claim 1, in which
A is (C₁-C₃)-alkylene, (C₁-C₃)-haloalkylene or (C₂-C₃)-alkenylene;
R¹ is (C₅-C₁₀)cycloalkyl or (C₅-C₁₀)cycloalkenyl, which radicals are unsubstituted or substituted by one or more radicals selected from (C₁-C₆)alkyl, (C₁-C₆)haloalkyl, halogen, (C₁-C₆)alkoxy, (C₁-C₆)haloalkoxy, (C₁-C₆)alkylthio and (C₁-C₆)haloalkylthio;
or is (C₅-C₁₀)aryl or (C₅-C₁₀)heterocyclyl, where each of the last 2 mentioned radicals is unsubstituted or substituted by one or more radicals selected from (C₁-C₆)alkyl, (C₁-C₆)haloalkyl, (C₂-C₆)alkenyl, (C₂-C₆)haloalkenyl, (C₂-C₆)alkynyl, (C₂-C₆)haloalkynyl, halogen, (C₁-C₆)alkoxy, (C₁-C₆)haloalkoxy, (C₂-C₆)alkenyloxy, (C₂-C₆)haloalkenyloxy, (C₂-C₆)alkynyloxy, (C₂-C₆)haloalkynyloxy, S(O)ₘR⁷,-(CH₂)ₙR⁸, S(O)ₚR⁸ and OR⁸, or two adjacent OH groups may together with two adjacent carbon atoms of the heterocyclyl group form a 2-R¹¹, 2-R¹²-1,3-dioxolan-yl ring, or when R¹ is (3-10)heterocyclyl may also be oxo;
R² is H;
R³ is H, COCH₃, COCF₃ or CO₂CH₃; and
R⁴ is H, methyl or trifluoromethyl.

11. The use of a compound as defined in claim 1, in which
A is (C₁-C₃)-alkylene, (C₁-C₃)-haloalkylene or (C₂-C₃)-alkenylene;
R¹ is cyclopentyl, cyclohexyl, cyclopentenyl or cyclohexenyl, which rings are optionally fused to a second cyclopentyl, cyclohexyl, cyclopentenyl or cyclohexenyl ring, which ring may be the same or different, and which rings are unsubstituted or substituted by one or more radicals selected from the group consisting of (C₁-C₆)alkyl, (C₁-C₆)haloalkyl, halogen, (C₁-C₆)alkoxy, (C₁-C₆)haloalkoxy, (C₁-C₆)alkylthio and (C₁-C₆)haloalkylthio;
or is cycloheptanyl, cyclooctanyl, cycloheptenyl, cyclooctenyl, bicyclo[2.2.1]heptenyl or bicyclo[2.2.1]heptanyl where each of the last 6 mentioned rings is unsubstituted or substituted by one or more (C₁-C₆)alkyl radicals;
or is phenyl, naphthyl, pyridyl, thienyl, benzthienyl, furyl, isoxazolyl or imidazolyl where each of the last 8 mentioned radicals is unsubstituted or substituted by one or more radicals selected from the group consisting of (C₁-C₆)alkyl, (C₁-C₆)haloalkyl, (C₂-C₆)alkenyl, (C₂-C₆)haloalkenyl, (C₂-C₆)alkynyl, (C₂-C₆)haloalkynyl, halogen, (C₁-C₆)alkoxy and S(O)ₘR⁷;
or is dihydropyranyl, tetrahydropyranyl, tetrahydrofuryl, 1,3-dioxolanyl, 1,4-benzodioxanyl, pyrrolidinyl or oxetanyl where each of the last 7 mentioned rings is unsubstituted or substituted by one or more radicals selected from the group consisting of (C₁-C₆)alkyl, (C₁-C₆)haloalkyl, (C₂-C₆)alkenyl, halogen, (C₁-C₆)alkoxy, (C₂-C₆)alkenyloxy, S(O)ₘR⁷ and -(CH₂)ₙR⁸;
or is tetrahydropyranyl fused to a 2-R¹¹, 2-R¹²-1,3-dioxolan-yl ring;
or is adamantyl;
R² is H;
R³ is H, COCH₃, COCF₃ or CO₂CH₃; and
R⁴ is H, methyl or trifluoromethyl.

12. The use of a compound as defined in claim 1, in which
A is (C₁-C₃)-alkylene, (C₁-C₃)-haloalkylene or (C₂-C₃)-alkenylene;
R¹ is cyclopentyl, cyclohexyl, cyclopentenyl or cyclohexenyl which rings are unsubstituted or substituted by one or more radicals selected from the group consisting of (C₁-C₆)alkyl, (C₁-C₆)haloalkyl, halogen, (C₁-C₆)alkoxy, (C₁-C₆)haloalkoxy, (C₁-C₆)alkylthio and (C₁-C₆)haloalkylthio;
or is cyclooctanyl, bicyclo[2.2.1]heptenyl or bicyclo[2.2.1]heptanyl where each of the last 3 mentioned rings is unsubstituted or substituted by one or more (C₁-C₆)alkyl radicals;
or is phenyl, naphthyl, pyridyl, thienyl, benzthienyl, furyl, isoxazolyl or imidazolyl, where each of the last 8 mentioned rings is unsubstituted or substituted by one or more radicals selected from the group consisting of (C₁-C₆)alkyl, (C₁-C₆)haloalkyl, (C₂-C₆)alkenyl, halogen, (C₁-C₆)alkoxy, (C₂-C₆)alkenyloxy, S(O)ₘR⁷ and -(CH₂)ₙR⁸;
or is dihydropyranyl, tetrahydropyranyl, tetrahydrofuryl, 1,3-dioxolanyl, 1,4-benzodioxanyl, pyrrolidinyl or oxetanyl where each of the last 7 mentioned rings is unsubstituted or substituted by one or more radicals selected from the group consisting of (C₁-C₆)alkyl, (C₁-C₆)haloalkyl, (C₂-C₆)alkenyl, halogen and (C₁-C₆)alkoxy ;
or is tetrahydropyranyl fused to a 1,3-dloxolan-yl ring;
or is adamantyl;
R² is H;
R³ is H, COCH₃, COCF₃ or CO₂CH₃; and
R⁴ is H, methyl or trifluoromethyl.

13. The use of a compound as defined in claim 1, in which
A is -CH₂-, -CH₂CH₂-, -CH(CH₃)-, -CH(CH₃)CH₂- or -CH₂CH(CH₃)-:
R¹ is cyclopentyl, cyclohexyl, cyclopentenyl, cyclohexenyl, phenyl, naphthyl, pyridyl, thienyl, benzthienyl, furyl, isoxazolyl or imidazolyl tetrahydropyranyl, tetrahydrofuryl, dihydropyranyl, tetrahydropyranyl, tetrahydrofuryl, 1,3-dioxolanyl, 1,4-benzodioxanyl, pyrrolidinyl or oxetanyl where each of the last 12 mentioned radicals is unsubstituted or substituted by one or more radicals selected from the group consisting of (C₁-C₃)alkyl, (C₁-C₃)haloalkyl, halogen and (C₁-C₃)alkoxy;
or is cyclooctanyl, bicyclo[2.2.1]heptenyl, bicyclo[2.2.1]heptanyl, dihydropyranyl, tetrahydropyranyl, tetrahydrofuryl, 1,3-dioxolanyl, 1,4-benzodioxanyl, pyrrolidinyl or oxetanyl where each of the last 10 mentioned rings is unsubstituted or substituted by one or more (C₁-C₆)alkyl radicals;
or is tetrahydropyranyl fused to a 1,3-dioxofan-yl ring;
or is adamantyl; and
R², R³ and R⁴ are each H.

14. The use of a composition for plant growth regulation which comprises one or more compounds of formule (I) as defined in anyone of claims 1 to 13 or an agriculturally acceptable salt thereof, carriers and/or surfactants useful for plant protection formulations.

15. The use as claimed in claim 14, where the composition comprises a further active compound selected from the group consisting of acaricides, fungicides, herbicides, insecticides, nematicides or plant growth regulating substances not identical to compounds defined by formula (I) of claim 1.

16. The use as claimed in anyone of claims 14 to 15 for plant growth regulation, in which the plant is a monocctyledoneous or dicotyledoneous crop plant.

17. The use as claimed In claim 16, wherein the plant is selected from the group consisting of wheat, barley, rye, triticale, vice, maize, sugar beet, cotton, or soybeans.

18. A method for growth regulation in crop plants, which comprises applying an effective amount of a compound of formula (I) as defined in claims 1 to 13 to the site where the action is desired said method comprising applying to plants, to seeds from which they grow or to the locus in which they grow, a non-phytotoxic, effective plant growth regulating amount of one or more compounds of formula (I).

19. A method as claimed in claim 18 in which the dosage of one or more compounds of formula (I) is 1 to 100 g a.i./ha in plant growth regulation, repectively 1 to 100 mg of compound/kg of seed in seed treatment.

## Patentansprüche

1. Verwendung einer Verbindung der Formel (I) oder eines landwirtschaftlich verträglichen Salzes hievon zur Regulierung des Pflanzenwachstums 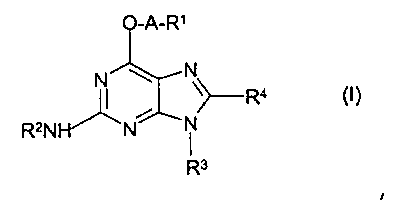 worin:
A für (C₁-C₆) -Alkylen oder (C₁-C₈)-Halogenalkylen steht, in welchen Gruppen ein Methylenrest durch eine Gruppe, ausgewählt aus -C(=O)-, -O- und -S- ersetzt sein kann, mit der Maßgabe, dass die ersetzende Gruppe nicht an das benachbarte O-Atom gebunden ist; oder (C₂-C₆)-Alkenylen, (C₂-C₆) -Halogenalkenylen, (C₃-C₆) -Alkinylen oder (C₃-C₆) - Halogenalkinylen darstellt;
R¹ für H, (C₃-C₁₀)-Cycloalkyl oder (C₅-C₁₀)-Cycloalkenyl steht, worin jeder der zuletzt erwähnten zwei Reste unsubstituiert oder durch einen oder mehrere R⁵-Reste substituiert ist; oder (C₅-C₁₀)-Aryl oder (3-10)-Heterocyclyl darstellt, worin jeder der zuletzt erwähnten zwei Reste unsubstituiert oder mit einem oder mehreren R⁶-Resten substituiert ist;
R² H, (C₁-C₃)-Alkyl oder (C₁-C₃)-Halogenalkyl darstellt;
R³ H, CO-(C₁-C₃)-Alkyl, CO-(C₁-C₃)-Halogenalkyl, CO₂-(C₁-C₃)-Alkyl, CONR²R^{2a} oder COS-(C₁-C₃)-Alkyl bedeutet;
R⁴ für H, Halogen, (C₁-C₃) -Alkyl oder (C₁-C₃) -Halogenalkyl steht;
R⁵ (C₁-C₆)-Alkyl (C₁-C₈)-Halogenalkyl, Halogen, (C₁-C₆)-Alkoxy, (C₁-C₆)-Halogenalkoxy, (C₁-C₆)-Alkylthio oder (C₁-C₆) -Halogenalkylthio darstellt;
R⁶ (C₁-C₆)-Alkyl, (C₁-C₆)-Halogenalkyl, (C₂-C₆)-Alkenyl, (C₂-C₆)-Halogenalkenyl, (C₂-C₆)-Alkinyl, (C₂-C₆)-Halogenalkinyl, Halogen, (C₁-C₆)-Alkoxy, (C₁-C₆)-Halogenalkoxy, (C₂-C₆)-Alkenyloxy, (C₂-C₆)-Halogenalkenyloxy, (C₂-C₆)-Alkinyloxy, (C₂-C₆)-Halogenalkinyloxy, S(O)ₘR⁷, CN, NO₂, OH, -(CH2)ₙR⁸, COR⁹, NR¹⁰COR⁹, NR⁹SO₂R⁷, CONR⁹R¹⁰, NR⁹R¹⁰, S(O)ₚR⁸, OR⁸ oder CO₂R⁷ bedeutet oder zwei benachbarte OH-Gruppen zusammen mit zwei benachbarten Kohlenstoffatomen der Heterocylgruppe einen 2-R¹¹,2-R¹²-1,3-Dioxolan-yl-Ring bilden können, oder, wenn R¹ für (3-10)-Heterocyclyl steht, auch Oxo sein können;
R⁷ (C₁-C₆)-Alkyl oder (C₁-C₆)-Halogenalkyl bedeutet;
R⁸ Phenyl ist, unsubstituiert oder substituiert mit einem oder mehreren Resten, ausgewählt aus der Gruppe, bestehend aus (C₁-C₆)-Alkyl, (C₁-C₆)-Halogenalkyl, Halogen, (C₁-C₆)-Alkoxy, (C₁-C₆)-Halogenalkoxy, S(O)ₘR⁷, CN und NO₂;
R⁹ und R¹⁰ jeweils unabhängig H, (C₁-C₆)-Alkyl oder (C₁-C₆)-Halogenalkyl darstellen;
R¹¹ für H, (C₁-C₆)-Alkyl oder Phenyl steht;
R¹² H oder (C₁-C₆)-Alkyl darstellt; und
m, n und p jeweils unabhängig 0, 1 oder 2 sind.

2. Verwendung einer Verbindung wie in Anspruch 1 definiert, worin A für (C₁-C₃)-Alkylen oder (C₁-C₃)-Halogenalkylen oder (C₂-C₃)-Alkenylen steht.

3. Verwendung einer Verbindung, wie in Anspruch 1 definiert, worin
R¹ für (C₃-C₁₀)-Cycloalkyl oder (C₅-C₁₀)-Cycloalkenyl steht, welche Reste unsubstituiert oder mit einem oder mehreren Resten substituiert sind, ausgewählt aus (C₁-C₆)-Alkyl oder (C₁-C₆)-Halogenalkyl, Halogen, (C₁-C₆)-Alkoxy, (C₁-C₆)-Halogenalkoxy, (C₁-C₆)-Alkylthio und (C₁-C₆)-Halogenalkylthio;
oder (C₅-C₁₀)-Aryl oder (C₅-C₁₀)-Heterocyclyl bedeutet, worin jeder der zuletzt erwähnten zwei Reste unsubstituiert oder mit einem oder mehreren Resten substituiert ist, ausgewählt aus (C₁-C₆)-Alkyl, (C₁-C₆)-Halogenalkyl, (C₂-C₆)-Alkenyl, (C₂-C₆) -Halogenalkenyl, (C₂-C₆)-Alkinyl, (C₂-C₆)-Halogenalkinyl, Halogen, (C₁-C₆)-Alkoxy, (C₁-C₆) -Halogenalkoxy, (C₂-C₆) -Alkenyloxy, (C₂-C₆)-Halogenalkenyloxy, (C₂-C₆)-Alkinyloxy, (C₂-C₆)-Halogenalkinyloxy, S(O)ₘR⁷, -(CH₂)ₙR⁸, S(O)ₚR⁸, OR⁸, oder zwei benachbarte OH-Gruppen gemeinsam mit zwei benachbarten Kohlenstoffatomen der Heterocyclylgruppe einen 2-R¹¹,2-R¹²-1,3-Dioxolan-yl-Ring bilden, oder, wenn R¹ für (C₅-C₁₀)-Heterocyclyl steht, auch Oxo sein können.

4. Verwendung einer Verbindung wie in Anspruch 1 definiert, worin
R¹ für Cyclopentyl, Cyclohexyl, Cyclopentenyl oder Cyclohexenyl steht, welche Ringe wahlweise mit einem zweiten Cyclopentyl-, Cyclohexyl-, Cyclopentenyl- oder Cyclohexenylring anneliert sind, welcher Ring gleich oder verschieden sein kann, und welche Ringe mit einem oder mehreren Resten substituiert sind, ausgewählt aus der Gruppe bestehend aus (C₁-C₆)-Alkyl, (C₁-C₆)-Halogenalkyl, Halogen, (C₁-C₆)-Alkoxy, (C₁-C₆)-Halogenalkoxy, (C₁-C₆)-Alkylthio und (C₁-C₆)-Halogenalkylthio;
oder Cycloheptanyl, Cyclooctanyl, Cycloheptenyl, Cyclooctenyl, Bicyclo[2.2.1]heptenyl oder Bicyclo[2.2.1]heptanyl bedeutet, wobei jeder der zuletzt erwähnten sechs Ringe unsubstituiert oder durch einen oder mehrere (C₁-C₆)-Alkyl-Reste substituiert ist;
oder Phenyl, Naphthyl, Pyridyl, Thienyl, Benzthienyl, Furyl, Isoxazolyl oder Imidazolyl bedeutet, worin jeder der zuletzt erwähnten acht Reste unsubstituiert oder mit einem oder mehreren Resten substituiert ist, ausgewählt aus der Gruppe, bestehend aus (C₁-C₆)-Alkyl, (C₁-C₆)-Halogenalkyl, (C₂-C₆)-Alkenyl, (C₂-C₆)-Halogenalkenyl, (C₂-C₆)-Alkinyl, (C₂-C₆)-Halogenalkinyl, Halogen, (C₁-C₆)-Alkoxy und S(O)ₘR⁷;
oder Dihydropyranyl, Tetrahydropyranyl, Tetrahydrofuryl, 1,3-Dioxolanyl, 1,4-Benzodioxanyl, Pyrrolidinyl oder Oxetanyl darstellt, worin jeder der zuletzt erwähnten sieben Ringe unsubstituiert oder mit einem oder mehreren Resten substituiert ist, ausgewählt aus der Gruppe, bestehend aus (C₁-C₆)-Alkyl, (C₁-C₆)-Halogenalkyl, (C₂-C₆)-Alkenyl, Halogen, (C₁-C₆)-Alkoxy, (C₂-C₆)-Alkenyloxy, S(O)ₘR⁷ und -(CH₂)ₙR⁸;
oder Tetrahydropyranyl darstellt, anneliert mit einem 2-R¹¹,2-R¹²-1,3-dioxolan-yl-Ring;
oder Adamantyl bedeutet.

5. Verwendung einer Verbindung wie in Anspruch 1 definiert, worin
R¹ für Cyclopentyl, Cyclohexyl, Cyclopentenyl oder Cyclohexenyl steht, welche Ringe unsubstituiert oder mit einem oder mehreren Resten substituiert sind, ausgewählt von der Gruppe, bestehend aus (C₁-C₆)-Alkyl, (C₁-C₆)-Halogenalkyl, Halogen, (C₁-C₆)-Alkoxy, (C₁-C₆)-Halogenalkoxy, (C₁-C₆)-Alkylthio und (C₁-C₆)-Halogenalkylthio;
oder Cyclooctanyl, Bicyclo[2.2.1]heptenyl oder Bicyclo-[2.2.1]heptanyl bedeutet, worin jeder der zuletzt erwähnten drei Ringe unsubstituiert oder mit einem oder mehreren (C₁-C₆)-Alkylresten substituiert ist;
oder Phenyl, Naphthyl, Pyridyl, Thienyl, Benzthienyl, Furyl, Isoxazolyl oder Imidazolyl darstellt, worin jeder der zuletzt erwähnten acht Ringe unsubstituiert oder mit einem oder mehreren Resten substituiert ist, ausgewählt aus der Gruppe, bestehend aus (C₁-C₆)-Alkyl, (C₁-C₆)-Halogenalkyl, (C₂-C₆)-Alkenyl, Halogen, (C₁-C₆)-Alkoxy, (C₂-C₆)-Alkenyloxy, S(O)ₘR⁷ und -(CH₂)ₙR⁸;
oder Dihydropyranyl, Tetrahydropyranyl, Tetrahydrofuryl, 1,3-Dioxolanyl, 1,4-Benzodioxanyl, Pyrrolidinyl oder Oxetanyl bedeutet, worin jeder der zuletzt erwähnten sieben Ringe unsubstituiert oder mit einem oder mehreren Resten substituiert ist, ausgewählt von der Gruppe, bestehend aus (C₁-C₆)-Alkyl, (C₁-C₆)-Halogenalkyl, (C₂-C₆)-Alkenyl, Halogen und (C₁-C₆)-Alkoxy;
oder Tetrahydropyranyl darstellt, anneliert mit einem 1,3-Dioxolan-yl-Ring;
oder Adamantyl bedeutet.

6. Verwendung einer Verbindung wie in Anspruch 1 definiert, worin
R¹ für Cyclopentyl, Cyclohexyl, Cyclopentenyl, Cyclohexenyl, Phenyl, Naphthyl, Pyridyl, Thienyl, Benzthienyl, Furyl, Isoxazolyl oder Imidazolyl, Tetrahydropyranyl, Tetrahydrofuryl, Dihydropyranyl, Tetrahydropyranyl, Tetrahydrofuryl, 1,3-Dioxolanyl, 1,4-Benzodioxanyl, Pyrrolidinyl oder Oxetanyl steht, worin jeder der zuletzt erwähnten zwölf Reste unsubstituiert oder mit einem oder mehreren Resten substituiert ist, ausgewählt aus der Gruppe bestehend aus (C₁-C₃)-Alkyl, (C₁-C₃)-Halogenalkyl, Halogen und (C₁-C₃)-Alkoxy;
oder Cyclooctanyl, Bicyclo[2.2.1]heptenyl, Bicyclo[2.2.1]heptanyl, Dihydropyranyl, Tetrahydropyranyl, Tetrahydrofuryl, 1,3-Dioxolanyl, 1,4-Benzodioxanyl, Pyrrolidinyl oder Oxetanyl bedeutet, worin jeder der zuletzt erwähnten zehn Ringe unsubstituiert oder mit einem oder mehreren (C₁-C₆)-Alkylresten substituiert ist;
oder Tetrahydropyranyl darstellt, das anneliert mit einem 1,3-Dioxolan-yl-Ring ist;
oder Adamantyl bedeutet.

7. Verwendung einer Verbindung wie in einem der Ansprüche 1 bis 6 definiert, worin R² für H steht.

8. Verwendung einer Verbindung wie in einem der Ansprüche 1 bis 7 definiert, worin R³ für H, COCH₃, COCF₃ oder CO₂CH₃ steht.

9. Verwendung einer Verbindung wie in einem der Ansprüche 1 bis 8 definiert, worin R⁴ für H, Methyl oder Trifluoromethyl steht.

10. Verwendung einer Verbindung wie in Anspruch 1 definiert, worin
A für (C₁-C₃)-Alkylen, (C₁-C₃)-Halogenalkylen oder (C₂-C₃)-Alkenylen steht;
R¹ (C₅-C₁₀)-Cycloalkyl oder (C₅-C₁₀)-Cycloalkenyl bedeutet, welche Reste unsubstituiert oder mit einem oder mehreren Resten substituiert ist, ausgewählt unter (C₁-C₆)-Alkyl, (C₁-C₆)-Halogenalkyl, Halogen, (C₁-C₆)-Alkoxy, (C₁-C₆)-Halogenalkoxy, (C₁-C₆)-Alkylthio und (C₁-C₆)-Halogenalkylthio;
oder (C₅-C₁₀)-Aryl oder (C₅-C₁₀)-Heterocyclyl darstellt, worin jeder der zuletzt erwähnten zwei Reste unsubstituiert oder mit einem oder mehreren Resten substituiert ist, ausgewählt aus (C₁-C₆)-Alkyl, (C₁-C₆)-Halogenalkyl, (C₂-C₆)-Alkenyl, (C₂-C₆)-Halogenalkenyl, (C₂-C₆)-Alkinyl, (C₂-C₆)-Halogenalkinyl, Halogen, (C₁-C₆)-Alkoxy, (C₁-C₆)-Halogenalkoxy, (C₂-C₆)-Alkenyloxy, (C₂-C₆)-Halogenalkenyloxy, (C₂-C₆)-Alkinyloxy, (C₂-C₆)-Halogenalkinyloxy, S(O)ₘR⁷, -(CH₂)ₙR⁸, S(O)ₚR⁸, OR⁸, oder zwei benachbarte OH-Gruppen gemeinsam mit zwei benachbarten Kohlenstoffatomen der Heterocyclylgruppe einen 2-R¹¹,2-R¹²-1,3-Dioxolan-yl-Ring ausbilden können, oder wenn R¹ für (3-10)-Heterocyclyl steht, auch Oxo sein können;
R² H bedeutet;
R³ H, COCH₃, COCF₃ oder CO₂CH₃ darstellt; und
R⁴ H, Methyl oder Trifluoromethyl bedeutet.

11. Verwendung einer Verbindung wie in Anspruch 1 definiert, worin
A für (C₁-C₃)-Alkylen, (C₁-C₃)-Halogenalkylen oder (C₂-C₃)-Alkenylen steht;
R¹ Cyclopentyl, Cyclohexyl, Cyclopentenyl oder Cyclohexenyl ist, welche Ringe wahlweise mit einem zweiten Cyclopentyl-, Cyclohexyl-, Cyclopentenyl- oder Cyclohexenyl-ring anneliert sind, welcher Ring gleich oder verschieden sein kann, und welche Ringe unsubstituiert oder mit einem oder mehreren Resten substituiert sind, ausgewählt aus der Gruppe, bestehend aus (C₁-C₆)-Alkyl, (C₁-C₆) -Halogenalkyl, Halogen, (C₁-C₆) -Alkoxy, (C₁-C₆)-Halogenalkoxy, (C₁-C₆)-Alkylthio und (C₁-C₆)-Halogenalkylthio;
oder für Cycloheptanyl, Cyclooctanyl, Cycloheptenyl, Cyclooctenyl, Bicyclo[2.2.1]heptenyl oder Bicyclo[2.2.1]-heptanyl steht, worin jeder der zuletzt erwähnten sechs Ringe unsubstituiert oder mit einem oder mehreren (C₁-C₆)-Alkylresten substituiert ist;
oder Phenyl, Naphthyl, Pyridyl, Thienyl, Benzthienyl, Furyl, Isoxazolyl oder Imidazolyl bedeutet, worin jeder der zuletzt erwähnten acht Reste unsubstituiert oder mit einem oder mehreren Resten substituiert ist, ausgewählt aus der Gruppe, bestehend aus (C₁-C₆)-Alkyl, (C₁-C₆)-Halogenalkyl, (C₂-C₆)-Alkenyl, (C₂-C₆) -Halogenalkenyl, (C₂-C₆) -Alkinyl, (C₂-C₆) -Halogenalkinyl, Halogen, (C₁-C₆)-Alkoxy und S(O)ₘR⁷;
oder Dihydropyranyl, Tetrahydropyranyl, Tetrahydrofuryl, 1,3-Dioxolanyl, 1,4-Benzodioxanyl, Pyrrolidinyl oder Oxetanyl bedeutet, wobei jeder der zuletzt erwähnten sieben Ringe unsubstituiert oder mit einem oder mehreren Resten substituiert ist, ausgewählt von der Gruppe, bestehend aus (C₁-C₆)-Alkyl, (C₁-C₆)-Halogenalkyl, (C₂-C₆)-Alkenyl, Halogen, (C₁-C₆)-Alkoxy, (C₂-C₆)-Alkenyloxy, S(O)ₘR⁷ und -(CH₂)ₙR⁸;
oder Tetrahydropyranyl ist, anneliert mit einem 2-R¹¹,2-R¹²-1,3-Dioxolan-yl-Ring;
oder Adamantyl bedeutet;
R² H ist;
R³ H, COCH₃, COCF₃ oder CO₂CH₃ bedeutet; und
R⁴ H, Methyl oder Trifluoromethyl darstellt.

12. Verwendung einer Verbindung wie in Anspruch 1 definiert, worin
A (C₁-C₃)-Alkylen, (C₁-C₃)-Halogenalkylen, (C₂-C₃)-Alkenylen bedeutet;
R¹ Cyclopentyl, Cyclohexyl, Cyclopentenyl oder Cyclohexenyl darstellt, welche Ringe unsubstituiert oder mit einem oder mehreren Resten substituiert sind, ausgewählt aus der Gruppe, bestehend aus (C₁-C₆)-Alkyl, (C₁-C₆)-Halogenalkyl, Halogen, (C₁-C₆)-Alkoxy, (C₁-C₆)-Halogenalkoxy, (C₁-C₆)-Alkylthio und (C₁-C₆)-Halogenalkylthio;
oder Cyclooctanyl, Bicyclo[2.2.1]heptenyl oder Bicyclo-[2.2.1]heptanyl ist, worin jeder der zuletzt erwähnten drei Ringe unsubstituiert oder mit einem oder mehreren (C₁-C₆) -Alkylringen substituiert ist;
oder Phenyl, Naphthyl, Pyridyl, Thienyl, Benzthienyl, Furyl, Isoxazolyl oder Imidazolyl darstellt, worin jeder der zuletzt erwähnten acht Ringe unsubstituiert oder mit einem oder mehreren Resten substituiert ist, ausgewählt aus der Gruppe, bestehend aus (C₁-C₆)-Alkyl, (C₁-C₆)-Halogenalkyl, (C₂-C₆)-Alkenyl, Halogen, (C₁-C₆)-Alkoxy, (C₂-C₆)-Alkenyloxy, S(O)ₘR⁷ und -(CH₂)ₙR⁸;
oder Dihydropyranyl, Tetrahydropyranyl, Tetrahydrofuryl, 1,3-Dioxolanyl, 1,4-Benzodioxanyl, Pyrrolidinyl oder Oxetanyl bedeutet, worin jeder der zuletzt erwähnten sieben Ringe unsubstituiert oder mit einem oder mehreren Resten substituiert ist, ausgewählt aus der Gruppe, bestehend aus (C₁-C₆) -Alkyl, (C₁-C₆) -Halogenalkyl, (C₂-C₆)-Alkenyl, Halogen, (C₁-C₆)-Alkoxy;
oder Tetrahydropyranyl ist, anneliert mit einem 1,3-Dioxolan-yl-Ring;
oder Adamantyl bedeutet;
R² H ist;
R³ H, COCH₃, COCF₃ oder CO₂CH₃ darstellt; und
R⁴ H, Methyl oder Trifluoromethyl bedeutet.

13. Verwendung einer Verbindung wie in Anspruch 1 definiert, worin
A für -CH₂-, -CH₂CH₂-, -CH(CH₃)-, -CH(CH₃)CH₂- oder -CH₂CH(CH₃)- steht;
R¹ Cyclopentyl, Cyclohexyl, Cyclopentenyl, Cyclohexenyl, Phenyl, Naphthyl, Pyridyl, Thienyl, Benzthienyl, Furyl, Isoxazolyl oder Imidazolyl, Tetrahydropyranyl, Tetrahydrofuryl, Dihydropyranyl, Tetrahydropyranyl, Tetrahydrofuryl, 1,3-Dioxolanyl, 1,4-Benzodioxanyl, Pyrrolidinyl oder Oxetanyl bedeutet, worin jeder der zuletzt erwähnten zwölf Reste unsubstituiert oder mit einem oder mehreren Reste substituiert ist, ausgewählt aus der Gruppe, bestehend aus (C₁-C₃)-Alkyl, (C₁-C₃)-Halogenalkyl, Halogen und (C₁-C₃)-Alkoxy;
oder Cyclooctanyl, Bicyclo[2.2.1]heptenyl, Bicyclo[2.2.1]-heptanyl, Dihydropyranyl, Tetrahydropyranyl, Tetrahydrofuryl, 1,3-Dioxolanyl, 1,4-Benzodioxanyl, Pyrrolidinyl oder Oxetanyl ist, worin jeder der zuletzt erwähnten zehn Reste unsubstituiert oder mit einem oder mehreren (C₁-C₆)-Alkylresten substituiert ist;
oder Tetrahydropyranyl darstellt, anneliert mit einem 1,3-Dioxolan-yl-Ring;
oder Adamantyl bedeutet; und
R², R³ und R⁴ jeweils für H stehen.

14. Verwendung einer Zusammensetzung zur Regulierung des Pflanzenwachstums, welche eine oder mehrere Verbindungen der Formel (I), wie in einem der Ansprüche 1 bis 13 definiert, oder ein landwirtschaftlich verträgliches Salz hiervon, Träger und/oder Tenside, welche für Pflanzenschutzformulierungen nützlich sind, umfasst.

15. Verwendung nach Anspruch 14, wobei die Zusammensetzung eine weitere wirksame Verbindung umfasst, ausgewählt aus der Gruppe, bestehend aus Akariziden, Fungiziden, Herbiziden, Insektiziden, Nematoziden oder das Pflanzenwachstum regulierenden Substanzen, welche mit den Verbindungen, die durch die Formel (I) nach Anspruch 1 definiert sind, nicht identisch sind.

16. Verwendung nach einem der Ansprüche 14 bis 15 zur Regulierung des Pflanzenwachstums, wobei die Pflanze eine einkeimblättrige oder eine zweikeimblättrige Nutzpflanze ist.

17. Verwendung nach Anspruch 16, wobei die Pflanze von der Gruppe, bestehend aus Weizen, Gerste, Hafer, Triticale, Reis, Mais, Zuckerrübe, Baumwolle oder Sojabohnen, ausgewählt ist.

18. Verfahren zur Wachstumsregulierung bei Nutzpflanzen, welches Verfahren das Aufbringen einer wirksamen Menge einer Verbindung nach Formal (I), wie in den Ansprüchen 1 bis 13 definiert, auf die Stelle, an welcher die Wirkung gewünscht ist, umfasst, wobei das Verfahren das Aufbringen einer nicht phytotoxischen, wirksamen, das Pflanzenwachstum regulierenden Menge von einer oder mehreren Verbindungen der Formel (I) auf Pflanzen, auf Samen, aus welchen diese wachsen, oder auf den Ort, an dem diese wachsen, umfasst.

19. Verfahren nach Anspruch 18, wobei die Dosierung von einer oder mehreren Verbindungen der Formel (I) von 1 bis 100 g Wirkstoff/ha zur Regulierung des Pflanzenwachstums, bzw. von 1 bis 100 mg Verbindung/kg Samen zur Behandlung von Samen, beträgt.

## Revendications

1. Utilisation d'un composé de formule (I) ou d'un de ses sels acceptables en agriculture pour la régulation de la croissance de plantes 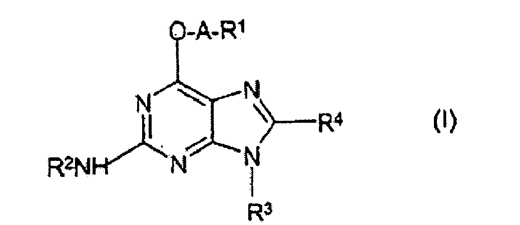 formule dans laquelle :
A représente un groupe alkylène en C₁ à C₆ ou halogénalkylène en C₁ à C₆, groupes dans lesquels un groupement méthylène peut être remplacé par un groupe choisi entre des groupes -C(=O), -O- et -S-, sous réserve que le groupe de remplacement ne soit pas lié à l'atome de O adjacent ; ou bien représente un groupe alcénylène en C₂ à C₆, halogénalcénylène en C₂ à C₆, alcynylène en C₃ à C₆ ou halogénalcynylène en C₃ à C₆ ;
R¹ représente H, un groupe cycloalkyle en C₃ à C₁₀ ou cycloalcényle en C₅ à C₁₀, chacun des deux derniers radicaux mentionnés étant non substitué ou substitué avec un ou plusieurs radicaux R⁵ ; ou bien représente un groupe aryle en C₅ à C₁₀ ou hétérocyclyle tri- à décagonal, chacun des deux derniers radicaux mentionnés étant non substitué ou substitué avec un ou plusieurs radicaux R⁶ ;
R² représente H, un groupe alkyle en C₁ à C₃ ou halogénalkyle en C₁ à C₃ ;
R³ représente H, un groupe CO-(alkyle en C₁ à C₃), CO-(halogénalkyle en C₁ à C₃), CO₂-(alkyle en C₁ à C₃), CONR²R^{2a} ou COS-(alkyle en C₁ à C₃) ;
R⁴ représente H, un groupe halogéno, alkyle en C₁ à C₃ ou halogénalkyle en C₁ à C₃ ;
R⁵ représente un groupe alkyle en C₁ à C₆, halogénalkyle en C₁ à C₆, halogéno, alkoxy en C₁ à C₆, halogénalkoxy en C₁ à C₆, alkylthio en C₁ à C₆ ou halogénalkylthio en C₁ à C₆ ;
R⁶ représente un groupe alkyle en C₁ à C₆, halogénalkyle en C₁ à C₆, alcényle en C₂ à C₆, halogénalcényle en C₂ à C₆, alcynyle en C₂ à C₆, halogénalcényle en C₂ à C₆, halogéno, alkoxy en C₁ à C₆, halogénalkoxy en C₁ à C₆, alcényloxy en C₂ à C₆, halogénalcényloxy en C₂ à C₆, alcynyloxy en C₂ à C₆, halogénalcynyloxy en C₂ à C₆, S(O)ₘR⁷, CN, NO₂, -(CH₂)ₙR⁸, COR⁹ , NR¹⁰COR⁹, NR⁹SO₂R⁷, CONR⁹R¹⁰, NR⁹R¹⁰, S(O)ₚR⁸, OR⁸ ou CO₂R⁷, ou bien deux groupes OH adjacents peuvent, conjointement avec deux atomes de carbone adjacents du groupe hétérocyclyle, former un noyau 2-R¹¹,2-R¹²-1,3-dioxolanne-yle, ou bien, lorsque R¹ représente un groupe hétérocyclyle tri- à décagonal, peuvent représenter également un groupe oxo ;
R⁷ représente un groupe alkyle en C₁ à C₆ ou halogénalkyle en C₁ à C₆ ;
R⁸ représente un groupe phényle non substitué ou substitué avec un ou plusieurs radicaux choisis dans le groupe consistant en des radicaux alkyle en C₁ à C₆, halogénalkyle en C₁ à C₆, halogéno, alkoxy en C₁ à C₆, halogénalkoxy en C₁ à C₆, S(O)ₘR⁷, CN et NO₂ ;
R⁹ et R¹⁰ représentent chacun indépendamment H, un groupe alkyle en C₁ à C₆ ou halogénalkyle en C₁ à C₆ ;
R¹¹ représente H, un groupe alkyle en C₁ à C₆ ou phényle ;
R¹² représente H, un groupe alkyle en C₁ à C₆ ; et
m, n et p sont chacun égaux indépendamment à 0, 1 ou 2.

2. Utilisation d'un composé suivant la revendication 1, dans lequel
A représente un groupe alkylène en C₁ à C₃, halogénalkylène en C₁ à C₃, ou alcénylène en C₂ ou C₃.

3. Utilisation d'un composé suivant la revendication 1, dans lequel
R¹ représente un groupe cycloalkyle en C₃ à C₁₀ ou cycloalcényle en C₅ à C₁₀, ces radicaux étant non substitués ou substitués avec un ou plusieurs radicaux choisis entre des radicaux alkyle en C₁ à C₆, halogénalkyle en C₁ à C₆, halogéno, alkoxy en C₁ à C₆, halogénalkoxy en C₁ à C₆, alkylthio en C₁ à C₆ et halogénalkylthio en C₁ à C₆ ;
ou bien représente un groupe aryle en C₅ à C₁₀ ou hétérocyclyle en C₅ à C₁₀, chacun des deux derniers radicaux mentionnés étant non substitué ou substitué avec un ou plusieurs radicaux choisis entre des radicaux alkyle en C₁ à C₆, halogénalkyle en C₁ à C₆, alcényle en C₂ à C₆, halogénalcényle en C₂ à C₆, alcynyle en C₂ à C₆, halogénalcynyle en C₂ à C₆, halogéno, alkoxy en C₁ à C₆, halogénalkoxy en C₁ à C₆, alcényloxy en C₂ à C₆, halogénalcényloxy en C₂ à C₆, alcynyloxy en C₂ à C₆, halogénalcynyloxy en C₂ à C₆, S(O)ₘR⁷, (CH₂)ₙR⁸, S(O)ₚR⁸ et OR⁸, ou bien deux groupes OH adjacents peuvent, conjointement avec deux atomes de carbone adjacents du groupe hétérocyclyle, former un noyau 2-R¹¹,2-R¹²-1,3-dioxolanne-yle, ou bien, lorsque R¹ représente un groupe hétérocyclyle en C₅ à C₁₀, peuvent représenter également un groupe oxo.

4. Utilisation d'un composé suivant la revendication 1, dans lequel
R¹ représente un groupe cyclopentyle, cyclohexyle, cyclopentényle ou cyclohexényle, ces noyaux étant facultativement condensés avec un second noyau cyclopentyle, cyclohexyle, cyclopentényle ou cyclohexényle, ce noyau pouvant être identique ou différent, ces noyaux étant non substitués ou substitués avec un ou plusieurs radicaux choisis dans le groupe consistant en des radicaux alkyle en C₁ à C₆, halogénalkyle en C₁ à C₆, halogéno, alkoxy en C₁ à C₆, halogénalkoxy en C₁ à C₆, alkylthio en C₁ à C₆ et halogénalkylthio en C₁ à C₆ ;
ou représente un groupe cycloheptanyle, cyclooctanyle, cycloheptényle, cyclooctényle, bicyclo[2.2.1]heptényle ou bicyclo[2.2.1]heptanyle, chacun des 6 derniers noyaux mentionnés étant non substitué ou substitué avec un ou plusieurs radicaux alkyle en C₁ à C₆ ;
ou représente un groupe phényle, naphtyle, pyridyle, thiényle, benzothiényle, furyle, isoxazolyle ou imidazolyle, chacun des 8 derniers radicaux mentionnés étant non substitué ou substitué avec un ou plusieurs radicaux choisis dans le groupe consistant en des radicaux alkyle en C₁ à C₆, halogénalkyle en C₁ à C₆, alcényle en C₂ à C₆, halogénalcényle en C₂ à C₆, alcynyle en C₂ à C₆, halogénalcynyle en C₂ à C₆, halogéno, alkoxy en C₁ à C₆ et S(O)ₘR⁷ ;
ou représente un groupe dihydropyrannyle, tétrahydropyrannyle, tétrahydrofuryle, 1,3-dioxolannyle, 1,4-benzodioxannyle, pyrrolidinyle ou oxétannyle, chacun des 7 derniers noyaux mentionnés étant non substitué ou substitué avec un ou plusieurs radicaux choisis dans le groupe consistant en des radicaux alkyle en C₁ à C₆, halogénalkyle en C₁ à C₆, alcényle en C₂ à C₆, halogéno, alkoxy en C₁ à C₆, alcényloxy en C₂ à C₆, S(O)ₘR⁷ et -(CH₂)ₙR⁸ ;
ou représente un groupe tétrahydropyrannyle condensé avec un noyau 2-R¹¹,2-R¹²-1,3-dioxolanne-yle ;
ou bien représente un groupe adamantyle.

5. Utilisation d'un composé suivant la revendication 1, dans lequel
R¹ représente un groupe cyclopentyle, cyclohexyle, cyclopentényle ou cyclohexényle, ces noyaux étant non substitués ou substitués avec un ou plusieurs radicaux choisis dans le groupe consistant en des radicaux alkyle en C₁ à C₆, halogénalkyle en C₁ à C₆, halogéno, alkoxy en C₁ à C₆, halogénalkoxy en C₁ à C₆, alkylthio en C₁ à C₆ et halogénalkylthio en C₁ à C₆ ;
ou représente un groupe cyclooctanyle, bicyclo[2.2.1]-heptényle ou bicyclo[2.2.1]heptanyle, chacun des 3 derniers noyaux mentionnés étant non substitué ou substitué avec un ou plusieurs radicaux alkyle en C₁ à C₆ ;
ou représente un groupe phényle, naphtyle, pyridyle, thiényle, benzothiényle, furyle, isoxazolyle ou imidazolyle, chacun des 8 derniers noyaux mentionnés étant non substitué ou substitué avec un ou plusieurs radicaux choisis dans le groupe consistant en des radicaux alkyle en C₁ à C₆, halogénalkyle en C₁ à C₆, alcényle en C₂ à C₆, halogéno, alkoxy en C₁ à C₆, alcényloxy en C₂ à C₆, S(O)ₘR⁷ et -(CH₂)ₙR⁸ ;
ou représente un groupe dihydropyrannyle, tétrahydropyrannyle, tétrahydrofuryle, 1,3-dioxolannyle, 1,4-benzodioxannyle, pyrrolidinyle ou oxétannyle, chacun des 7 derniers noyaux mentionnés étant non substitué ou substitué avec un ou plusieurs radicaux choisis dans le groupe consistant en des radicaux alkyle en C₁ à C₆, halogénalkyle en C₁ à C₆, alcényle en C₂ à C₆, halogéno et alkoxy en C₁ à C₆ ;
ou représente un groupe tétrahydropyrannyle condensé avec un noyau 1,3-dioxolanne-yle ;
ou bien représente un groupe adamantyle.

6. Utilisation d'un composé suivant la revendication 1, dans lequel
R¹ représente un groupe cyclopentyle, cyclohexyle, cyclopentényle, cyclohexényle, phényle, naphtyle, pyridyle, thiényle, benzothiényle, furyle, isoxazolyle, imidazolyle, tétrahydropyrannyle, tétrahydrofuryle, dihydropyrannyle, tétrahydropyrannyle, tétrahydrofuryle, 1,3-dioxolannyle, 1,4-benzodioxannyle, pyrrolidinyle ou oxétannyle, chacun des 12 derniers radicaux mentionnés étant non substitué ou substitué avec un ou plusieurs radicaux choisis dans le groupe consistant en des radicaux alkyle en C₁ à C₃, halogénalkyle en C₁ à C₃, halogéno et alkoxy en C₁ à C₃ ;
ou représente un groupe cyclooctanyle, bicyclo[2.2.1]-heptényle, bicyclo[2.2.1]heptanyle, dihydropyrannyle, tétrahydropyrannyle, tétrahydrofuryle, 1,3-dioxolannyle, 1,4-benzodioxannyle, pyrrolidinyle ou oxétannyle chacun des 10 derniers noyaux mentionnés étant non substitué ou substitué avec un ou plusieurs radicaux alkyle en C₁ à C₆ ;
ou représente un groupe tétrahydropyrannyle condensé avec un noyau 1,3-dioxolanne-yle ;
ou bien représente un groupe adamantyle.

7. Utilisation d'un composé suivant l'une quelconque des revendications 1 à 6, dans lequel R² représente H.

8. Utilisation d'un composé suivant l'une quelconque des revendications 1 à 7, dans lequel R³ représente H, un groupe COCH₃ , COCF₃ ou CO₂CH₃.

9. Utilisation d'un composé suivant l'une quelconque des revendications 1 à 8, dans lequel R⁴ représente H, un groupe méthyle ou trifluorométhyle.

10. Utilisation d'un composé suivant la revendication 1, dans lequel
A représente un groupe alkylène en C₁ à C₃, halogénalkylène en C₁ à C₃, ou alcénylène en C₂ ou C₃ ;
R¹ représente un groupe cycloalkyle en C₅ à C₁₀ ou cycloalcényle en C₅ à C₁₀, ces radicaux étant non substitués ou substitués avec un ou plusieurs radicaux choisis entre des radicaux alkyle en C₁ à C₆, halogénalkyle en C₁ à C₆, halogéno, alkoxy en C₁ à C₆, halogénalkoxy en C₁ à C₆, alkylthio en C₁ à C₆ et halogénalkylthio en C₁ à C₆ ;
ou représente un groupe aryle en C₅ à C₁₀ ou hétérocyclyle en C₅ à C₁₀, chacun des 2 derniers radicaux mentionnés étant non substitué ou substitué avec un ou plusieurs radicaux choisis entre des radicaux alkyle en C₁ à C₆, halogénalkyle en C₁ à C₆, alcényle en C₂ à C₆, halogénalcényle en C₂ à C₆, alcynyle en C₂ à C₆, halogénalcynyle en C₂ à C₆, halogéno, alkoxy en C₁ à C₆, halogénalkoxy en C₁ à C₆, alcényloxy en C₂ à C₆, halogénalcényloxy en C₂ à C₆, alcynyloxy en C₂ à C₆, halogénalcynyloxy en C₂ à C₆, S(O)ₘR⁷, -(CH₂)ₙR⁸, S(O)ₚR⁸ et OR⁸, ou bien deux groupes OH adjacents peuvent, conjointement avec deux atomes de carbone adjacents du groupe hétérocyclyle, former un noyau 2-R¹¹,2-R¹²-1,3-dioxolanne-yle, ou bien, lorsque R¹ représente un groupe hétérocyclyle tri- à décagonal, peuvent représenter également un groupe oxo ;
R² représente H ;
R³ représente H, un groupe COCH₃, COCF₃ ou CO₂CH₃ ; et
R⁴ représente H, un groupe méthyle ou trifluorométhyle.

11. Utilisation d'un composé suivant la revendication 1, dans lequel
A représente un groupe alkylène en C₁ à C₃, halogénalkylène en C₁ à C₃, ou alcénylène en C₂ ou C₃ ;
R¹ représente un groupe cyclopentyle, cyclohexyle, cyclopentényle ou cyclohexényle, ces noyaux étant facultativement condensés avec un second noyau cyclopentyle, cyclohexyle, cyclopentényle ou cyclohexényle, noyau qui peut être identique ou différent, ces noyaux étant non substitués ou substitués avec un ou plusieurs radicaux choisis dans le groupe consistant en des radicaux alkyle en C₁ à C₆, halogénalkyle en C₁ à C₆, halogéno, alkoxy en C₁ à C₆, halogénalkoxy en C₁ à C₆, alkylthio en C₁ à C₆ et halogénalkylthio en C₁ à C₆ ;
ou représente un groupe cycloheptanyle, cyclooctanyle, cycloheptényle, cyclooctényle, bicyclo[2.2.1]heptényle ou bicyclo[2.2.1]heptanyle, chacun des 6 derniers noyaux mentionnés étant non substitué ou substitué avec un ou plusieurs radicaux alkyle en C₁ à C₆ ;
ou représente un groupe phényle, naphtyle, pyridyle, thiényle, benzothiényle, furyle, isoxazolyle ou imidazolyle, chacun des 8 derniers radicaux mentionnés étant non substitué ou substitué avec un ou plusieurs radicaux choisis dans le groupe consistant en des radicaux alkyle en C₁ à C₆, halogénalkyle en C₁ à C₆, alcényle en C₂ à C₆, halogénalcényle en C₂ à C₆, alcynyle en C₂ à C₆, halogénalcynyle en C₂ à C₆, halogéno, alkoxy en C₁ à C₆ et S(O)ₘR⁷ ;
ou représente un groupe dihydropyrannyle, tétrahydropyrannyle, tétrahydrofuryle, 1,3-dioxolannyle, 1,4-benzodioxannyle, pyrrolidinyle ou oxétannyle, chacun des 7 derniers noyaux mentionnés étant non substitué ou substitué avec un ou plusieurs radicaux choisis dans le groupe consistant en des radicaux alkyle en C₁ à C₆, halogénalkyle en C₁ à C₆, alcényle en C₂ à C₆, halogéno, alkoxy en C₁ à C₆, alcényloxy en C₂ à C₆, S(O)ₘR⁷ et -(CH₂)ₙR⁸ ;
ou représente un groupe tétrahydropyrannyle condensé avec un noyau 2-R¹¹,2-R¹²-1,3-dioxolanne-yle ;
ou bien représente un groupe adamantyle ;
R² représente H ;
R³ représente H, un groupe COCH₃, COCF₃ ou CO₂CH₃ ; et
R⁴ représente H, un groupe méthyle ou trifluorométhyle.

12. Utilisation d'un composé suivant la revendication 1, dans:lequel
A représente un groupe alkylène en C₁ à C₃, halogénalkylène en C₁ à C₃, ou alcénylène en C₂ ou C₃ ;
R¹ représente un groupe cyclopentyle, cyclohexyle, cyclopentényle ou cyclohexényle, ces noyaux étant non substitués ou substitués avec un ou plusieurs radicaux choisis dans le groupe consistant en des radicaux alkyle en C₁ à C₆, halogénalkyle en C₁ à C₆, halogéno, alkoxy en C₁ à C₆, halogénalkoxy en C₁ à C₆, alkylthio en C₁ à C₆ et halogénalkylthio en C₁ à C₆ ;
ou représente un groupe cyclooctanyle, bicyclo[2.2.1]-heptényle ou bicyclo[2.2.1]heptanyle, chacun des 3 derniers noyaux mentionnés étant non substitué ou substitué avec un ou plusieurs radicaux alkyle en C₁ à C₆ ;
ou représente un groupe phényle, naphtyle, pyridyle, thiényle, benzothiényle, furyle, isoxazolyle ou imidazolyle, chacun des 8 derniers noyaux mentionnés étant non substitué ou substitué avec un ou plusieurs radicaux choisis dans le groupe consistant en des radicaux alkyle en C₁ à C₆, halogénalkyle en C₁ à C₆, alcényle en C₂ à C₆, halogéno, alkoxy en C₁ à C₆, alcényloxy en C₂ à C₆, S(O)ₘR⁷ et -(CH₂)ₙR⁸;
ou représente un groupe dihydropyrannyle, tétrahydropyrannyle, tétrahydrofuryle, 1,3-dioxolannyle, 1,4-benzodioxannyle, pyrrolidinyle ou oxétannyle, chacun des 7 derniers noyaux mentionnés étant non substitué ou substitué avec un ou plusieurs radicaux choisis dans le groupe consistant en des radicaux alkyle en C₁ à C₆, halogénalkyle en C₁ à C₆, alcényle en C₂ à C₆, halogéno et alkoxy en C₁ à C₆ ;
ou représente un groupe tétrahydropyrannyle condensé avec un noyau 1,3-dioxolanne-yle ;
ou bien représente un groupe adamantyle ;
R² représente H ;
R³ représente H, un groupe COCH₃, COCF₃ ou CO₂CH₃ ; et
R⁴ représente H, un groupe méthyle ou trifluorométhyle.

13. Utilisation d'un composé suivant la revendication 1, dans lequel
A représente un groupe -CH₂-, -CH₂CH₂-, -CH(CH3)-, -CH(CH₃)CH₂- ou -CH₂CH(CH₃)- ;
R¹ représente un groupe cyclopentyle, cyclohexyle, cyclopentényle, cyclohexényle, phényle, naphtyle, pyridyle, thiényle, benzothiényle, furyle, isoxazolyle, imidazolyle, tétrahydropyrannyle, tétrahydrofuryle, dihydropyrannyle, tétrahydropyrannyle, tétrahydrofuryle, 1,3-dioxolannyle, 1,4-benzodioxannyle, pyrrolidinyle ou oxétannyle, chacun des 12 derniers radicaux mentionnés étant non substitué ou substitué avec un ou plusieurs radicaux choisis dans le groupe consistant en des radicaux alkyle en C₁ à C₃, halogénalkyle en C₁ à C₃, halogéno et alkoxy en C₁ à C₃ ;
ou représente un groupe cyclooctanyle, bicyclo[2.2.1]-heptényle, bicyclo[2.2.1]heptanyle, dihydropyrannyle, tétrahydropyrannyle, tétrahydrofuryle, 1,3-dioxolannyle, 1,4-benzodioxannyle, pyrrolidinyle ou oxétannyle chacun des 10 derniers noyaux mentionnés étant non substitué ou substitué avec un ou plusieurs radicaux alkyle en C₁ à C₆ ;
ou représente un groupe tétrahydropyrannyle condensé avec un.noyau 1,3-dioxolanne-yle ;
ou bien représente un groupe adamantyle ; et
R², R³ et R⁴ représentent chacun H.

14. Utilisation d'une composition pour la régulation de la croissance de plantes, qui comprend un ou plusieurs composés de formule (I) répondant à la définition suivant l'une quelconque des revendications 1 à 13 ou un de leurs sels acceptables en agriculture, des supports et/ou agents tensioactifs utiles pour des formulations de protection des plantes.

15. Utilisation suivant la revendication 14, dans laquelle la composition comprend un composé actif supplémentaire choisi dans le groupe consistant en des acaricides, des fongicides, des herbicides, des insecticides, des nématicides ou des substances régulatrices de croissance de plantes non identiques aux composés définis par la formule (I) dans la revendication 1.

16. Utilisation suivant l'une quelconque des revendications 14 et 15, pour la régulation de la croissance de plantes, dans laquelle la plante est une plante cultivée monocotylédone ou dicotylédone.

17. Utilisation suivant la revendication 16, dans laquelle la plante est choisie dans le groupe consistant en le blé, l'orge, le seigle, le triticale, le riz, le maïs, la betterave sucrière, le cotonnier et le soja.

18. Procédé pour la régulation de la croissance de plantes cultivées, qui comprend l'application d'une quantité efficace d'un composé de formule (I) répondant à la définition suivant les revendications 1 à 13 au site où l'action est désirée, ledit procédé comprenant l'application aux plantes, aux semences à partir desquelles se développent ces plantes ou au milieu dans lequel elles croissent, d'une quantité efficace à des fins de régulation de croissance de plantes, non phytotoxique, d'un ou plusieurs composés de formule (I).

19. Procédé suivant la revendication 18, dans lequel la dose d'un ou plusieurs composés de formule (I) est de 1 à 100 g de i.a/ha à des fins de régulation de croissance de plantes, ou bien de 1 à 100 mg de composé/kg de semences dans le traitement des semences.
